# EUROPEAN PATENT APPLICATION

(11) **EP 4 390 522 A1**
(43) Date of publication of application: **26.06.2024**
(21) Application number: 22215020.3
(22) Date of filing: 20.12.2022
(51) Int. Cl.: G02F 1/01

(54) **LIGHT MODULATOR AND SUBSTRATE HAVING MICRO AND/OR NANO PATTERNED ELEMENTS FOR OPTICAL MODULATION**

(71) Applicant: eLstar Dynamics Patents B.V., 3235 CD Rockanje (NL)
(72) Inventor: MITIOGLU, Anatolie, 5651 GW Eindhoven (NL); MASSARD, Romaric Mathieu, 5651 GW Eindhoven (NL); THOMAS, David Richard, 06650 Opio (FR)
(74) Representative: DeltaPatents B.V.

(57) **Abstract**

Some embodiments are directed to a transparent substrate for use in a light modulator. The substrate has at least one driving electrode applied to a first surface of the substrate. The driving electrode may be arranged in a pattern across the substrate, and may receive an electric potential causing modulation of the optical properties of the light modulator. Patterned elements are applied to a surface of the substrate altering the phase, amplitude, and/or polarization of light interacting with the substrate.

## Description

### TECHNICAL FIELD

The presently disclosed subject matter relates to a substrate for use in a light modulator, a method of manufacturing a substrate, a light modulator, a method of calibrating a light modulator, a method of controlling a light modulator, and a computer readable medium.

### BACKGROUND

A known light modulator is disclosed in WO2022023180, included herein by reference. The known light modulator comprises transparent or reflective substrates. Multiple electrodes are applied to the substrates in a pattern across the substrate. A controller may apply an electric potential to the electrodes to obtain an electro-magnetic field between the electrodes providing electrophoretic movement of the particles towards or from an electrode.

### SUMMARY

It would be advantageous to have an improved light modulator. In particular, it would be advantageous to have an improved transparent substrate for use in a light modulator. In an embodiment, of the substrate micro and/or nanopatterned elements are applied to a surface of the substrate. The patterned elements alter the phase, amplitude, and/or polarization of light interacting with the substrate. Light interacting with the substrate includes light passing through the surface. Light interacting with the substrate may also include light reflected from the surface.

The patterned elements have a shape, e.g., a 2D shape parallel to the substrate or a 3D shape and a distribution that is chosen to effect a desired optical modulation. Patterned elements may be manufactured by patterning, which may comprise the process of fabricating nanostructures across the surface of the material, in this case the substrate. The patterned elements in an embodiment may be transparent, or may not be transparent. Transparent patterned elements have the advantage of a smaller reduction in transmissibility, although optical effect of the elements may be smaller, e.g., if they have a small refractive index.

In addition to the patterned elements, also at least one driving electrode may be applied to a first surface of the substrate, the driving electrode being arranged in a pattern across the substrate. The electrode is arranged to receive an electric potential causing modulation of the optical properties of the light modulator. In particular, the light modulator may have an optical layer adjacent to the substrate. Particles in the optical layer may be under control, e.g., electrophoretic control, of the electrode.

A metasurface, e.g., as formed by the patterned elements allows correction of optical artefacts caused by the presence of the driving electrodes on the substrate. In particular, diffraction and/or rainbowing may be reduced by adding nanoelements. For example, a Metasurfaces may comprise thin-film coating producing electromagnetic optics. Typically, a metasurface design is selected or optimized specifically for an electrode design. Using the same metasurface for a different pattern of electrode may not work.

A metasurface, e.g., as formed by the patterned elements also allows introduction of optical effects, possibly in addition to correction of artefacts. Optical effects include 3D rendering, holograms, lenses possibly having different focal points.

A metasurface is a layer of subwavelength-scale nanostructures that can be used to design thin optically functional devices. Various metasurface-based optical devices, also referred to as flat optics devices, have been realized with distinct performances.

The nanoelements may be applied to the same surface of the substrate or to an opposite surface of the substrate.

The nanoelements may be arranged to reduce reflection of the substrate, thus improving a dark state of a light modulator, e.g., deepening black levels.

Aspects of the presently disclosed subject matter further include a method of manufacturing a substrate, a light modulator, a method of calibrating a light modulator, a method of controlling a light modulator, and a computer readable medium.

### BRIEF DESCRIPTION OF THE DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Figure 1a schematically shows an example of an embodiment of a building block,
Figure 1b schematically shows an example of an embodiment of a substrate,
Figure 1c schematically shows an example of an embodiment of a substrate,
Figure 1d schematically shows an example of an embodiment of a substrate,
Figure 1e schematically shows an example of an embodiment of a substrate,
Figure 1f schematically shows an example of an embodiment of a substrate,
Figures 2a-2f schematically show an example of an embodiment of a substrate,
Figure 3a schematically shows an example of an embodiment of a light modulator,
Figure 3b schematically shows an example of an embodiment of a light modulator,
Figure 3c schematically shows an example of an embodiment of a car,
Figures 4a-4c schematically show an embodiment of a light modulator,
Figure 5a schematically shows an example of an embodiment of a light modulator,
Figure 5b schematically shows an example of an embodiment of a light modulator,
Figure 5c schematically shows an example of an embodiment of a light modulator,
Figure 6a schematically shows an example of an embodiment of a transparent substrate for use in a light modulator,
Figure 6b schematically shows an example of an embodiment of a transparent substrate for use in a light modulator,
Figure 6c.1 schematically shows an example of an embodiment of a transparent substrate for use in a light modulator,

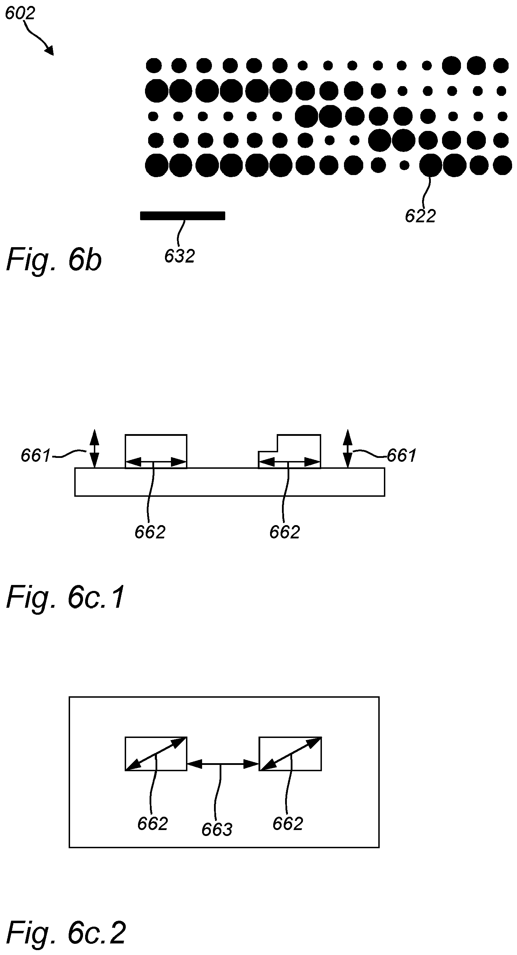

Figure 6c.2 schematically shows an example of an embodiment of a transparent substrate for use in a light modulator,

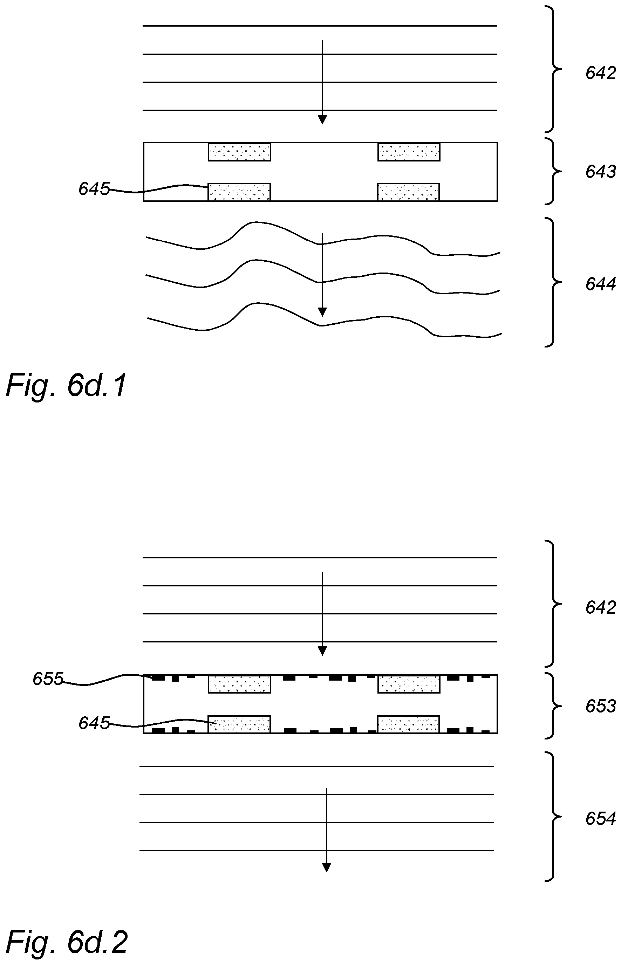

Figure 6d.1 schematically shows an example of a light modulator without patterned elements,
Figure 6d.2 schematically shows an example of an embodiment of a light modulator with patterned elements,

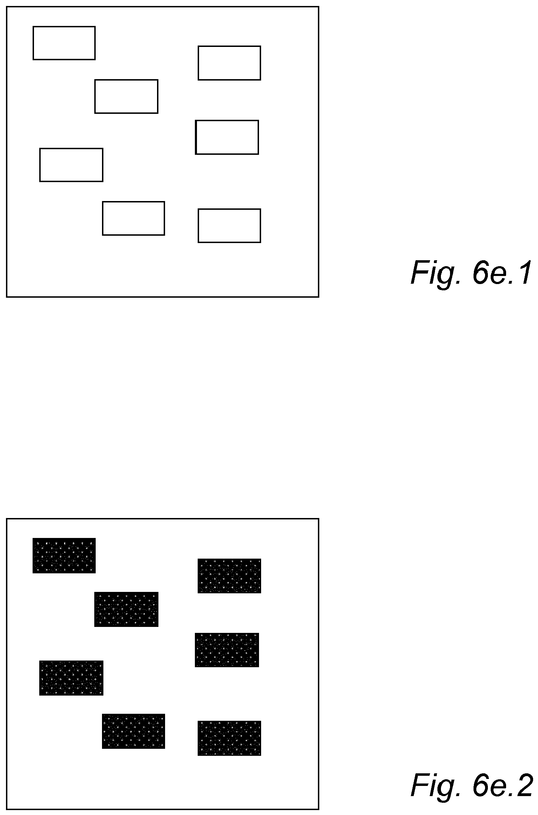

Figure 6e.1 schematically shows an example of a light modulator with conductive patterned elements in a non-active state,
Figure 6e.2 schematically shows an example of the light modulator with conductive patterned elements in an active state,

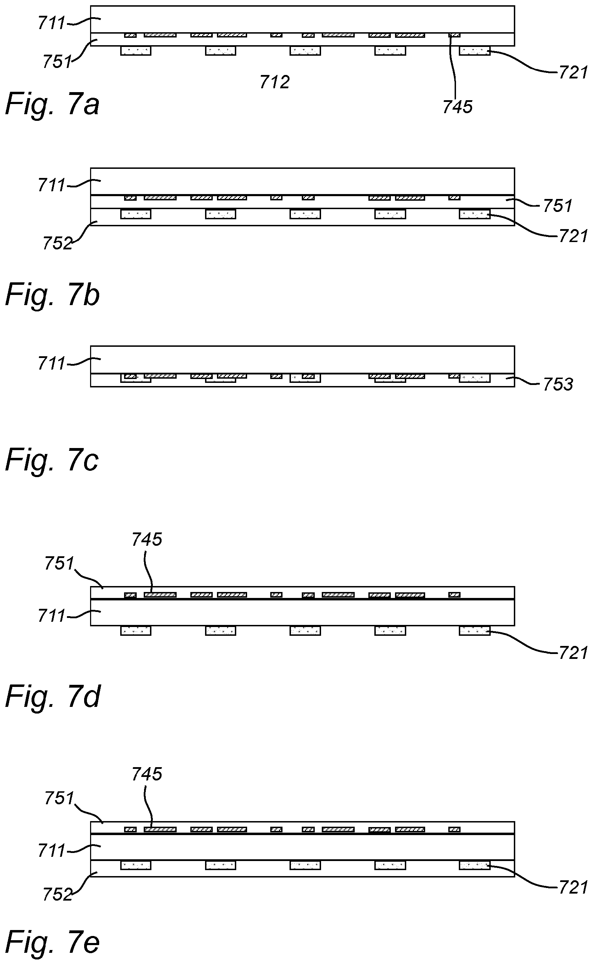

Figures 7a-7g schematically shows an example of an embodiment of a transparent substrate for use in a light modulator,

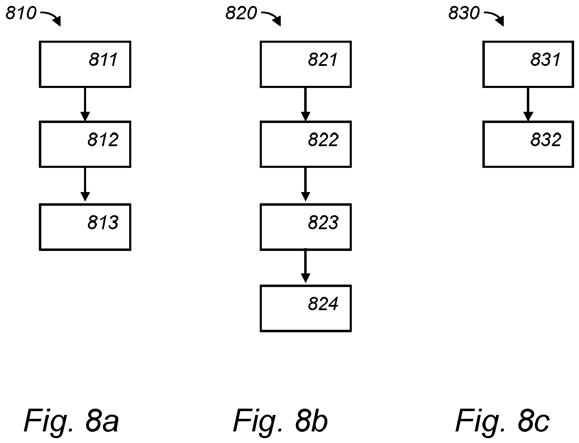

Figure 8a schematically shows an example of an embodiment of a method of manufacturing a substrate as in an embodiment.
Figure 8b schematically shows an example of an embodiment of a method of manufacturing a light modulator as in an embodiment.
Figure 8c schematically shows an example of an embodiment of a method of operating a light modulator as in an embodiment.

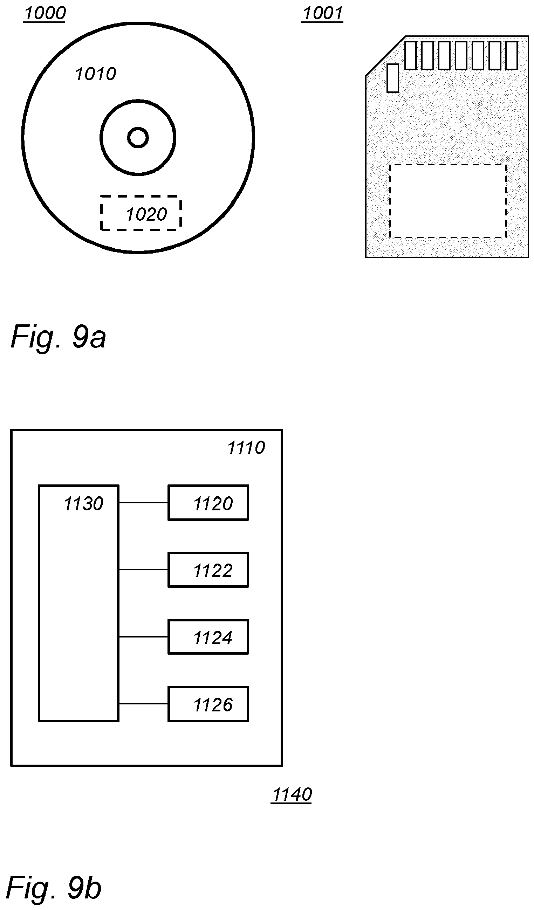

Figure 9a schematically shows a computer readable medium having a writable part comprising a computer program according to an embodiment,
Figure 9b schematically shows a representation of a processor system according to an embodiment.

### List of Reference Numerals

The following list of references and abbreviations is provided for facilitating the interpretation of the drawings and shall not be construed as limiting the claims.
- 10: a light modulator
- 11: a first substrate
- 12: a second substrate
- 13, 13a, 13b: electrodes
- 14, 14a, 14b: electrodes
- 15: a fluid
- 16: a controller
- 30: particles
- 20: a car
- 21: a light modulator
- 40: a light modulator
- 41: a first substrate
- 42: a second substrate
- 43: a third substrate
- 46: a controller

- 100-102: a substrate
- 111-114: a main line
- 121-124: a main line
- 131-134: interdigitated electrodes
- 140: a building block
- 141-144: a building block
- 110, 120: a driving bus
- 110', 120': a driving bus
- 119, 129: a connecting zone
- 191, 192: a direction
- 203-204: a substrate
- 211-222: a building block
- 251-262: a building block

- 501, 502: a light modulator
- 511, 512: transparent substrate
- 521, 522: driving electrode
- 523: particle
- 524: optical layer
- 531: a spacer
- 541, 542, 543, 544: patterned element

- 601, 602: a substrate
- 611, 612: driving electrode
- 621, 622: patterned element
- 631: virtual cutting line
- 632: virtual scale, 1 micrometer
- 642: a primary wavefront
- 643: a light modulator
- 644: a distorted wavefront
- 645: a driving electrode
- 653: a light modulator
- 654: a corrected wavefront
- 655: a patterned element
- 661: a height
- 662: a diameter
- 663: an interobject distance

- 711: transparent substrate
- 712: an optical layer side
- 721: driving electrode
- 745, 746: patterned element
- 751,752, 753: coating

- 1000, 1001: a computer readable medium
- 1010: a writable part
- 1020: a computer program
- 1110: integrated circuit(s)
- 1120: a processing unit
- 1122: a memory
- 1124: a dedicated integrated circuit
- 1126: a communication element
- 1130: an interconnect
- 1140: a processor system

### DETAILED DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them. Further, the subject matter that is presently disclosed is not limited to the embodiments only, but also includes every other combination of features described herein or recited in mutually different dependent claims.

Substrate are disclosed, e.g., for use in a light modulator, in particular, dynamic glazing. The substrate is transparent, and at least one driving electrode is applied to a side of the substrate, the driving electrode extending in a pattern across the side of the first substrate. Interestingly, when in use in a light modulator, it is advantageous to have patterned elements applied to a surface of the substrate to alter, e.g., correct, light interacting with the substrate. The patterned elements are arranged in a pattern on the substrate. The pattern may be repeating, but this is not necessary. The pattern is created in a pattern according to the desired modulation of the light caused by the patterned elements. For example, the plurality of patterned elements on a substrate may together form a metasurface.

There are many types of light modulators that use such as substrate. Some of the known light modulators are based on the electrophoretic principle. For example, the substrate may comprise multiple interdigitated driving electrodes applied to the substrate, e.g., two electrodes, each of the multiple driving electrodes being arranged in a pattern across the substrate, the multiple interdigitated driving electrodes being arranged alternatingly with respect to each other on the substrate. Having multiple interdigitated electrodes allows local control over the electric field enabling electrophoretic control of particles.

Electrophoretic light modulators are explained more extensively herein, and are used as the motivating example. In an embodiment, a light modulator comprises a first substrate and a second substrate. At least one of the first and second substrate may be according to an embodiment, having patterned elements. For example, the first and second substrates may be arranged with inner sides opposite to each other. Using a substrate according to an embodiment has, e.g., the effect of reducing optical interference. An optical layer is arranged between the first and second substrates. The driving electrode is arranged to modulate an electrical field in the optical layer. The optical layer comprises a fluid comprising particles, wherein the particles are electrically charged or chargeable. The particles may be moved under control of the electrical field. For example, a controller may be configured to apply an electric potential to the driving electrode to obtain an electro-magnetic field at the driving electrode providing electrophoretic movement of the particles towards or from one of the at least one driving electrode causing modulation of the optical properties of the light modulator.

Below a number of known light modulators are reviewed, showing some of the options in technology and electrodes. These known substrates can advantageously be modified by applying patterned elements. These examples also show light modulators with varying numbers of electrodes on a substrate.

International patent applications WO2011012499 A1 (included herein by reference) and WO2011131689 (included herein by reference) disclose light modulators in the form of electrophoretic display devices, e.g., e-Ink displays. A pixel of the display comprises an accumulation electrode and a field electrode, the accumulation electrode being arranged at a storage area for accumulating charged particles away from an aperture area, and the field electrode occupying a field-electrode area being at least a part of an aperture area of the pixel, the charged particles being movable between the accumulation electrode and the field electrode. In an embodiment, two electrodes are applied on a single substrate. The substrates may have patterned elements applied to a surface of the substrate to alter, e.g., correct, light interacting with the substrate.

US patent 10921678 with title 'Electrophoretic device', included herein by reference shows an electrophoretic device having only one patterned electrode on one of two substrates. For example, the one substrate with an electrode according to US 10921678 may be replaced with a substrate according to an embodiment comprising one single electrode. For example, an embodiment comprises a first transparent substrate with a field electrode, and a second substrate opposite of the first substrate, with an accumulation electrode. The first substrate and the second substrate enclose a pixel with a fluid and particles. In use an applied electro-magnetic field to the field electrode and the accumulation electrode provides movement of the particles from the field electrode and the accumulation electrode and vice versa. The substrates may have patterned elements applied to a surface of the substrate to alter, e.g., correct, light interacting with the substrate.

US patent 8054535B2 (included herein by reference) and US patent 8384658B2 (included herein by reference) show alternative example of electrophoretic light modulators in one of two substrates have two patterned electrodes.

Patterned electrodes are also used in dielectrophoretic light modulators. For example, US patent application US2005185104A1 (included herein by reference) and US20180239211A1 (included herein by reference) show a dielectrophoretic light modulators having a substrate with a patterned electrode. Any of these cited electrophoretic or dielectrophoretic light modulators may be adapted by applying patterned elements to a surface of the substrate to alter, e.g., correct, light interacting with the substrate.

The paper "Reversible Metal Electrodeposition Devices: An Emerging Approach to Effective Light Modulation and Thermal Management", included by reference, also shows a substrate on which a patterned electrode is applied. The patterned electrode may advantageously be arranged according to an embodiment.

An embodiment of a substrate may be used in an electrochromic device (ECD). An electrochromic device (ECD) controls optical properties such as optical transmission, absorption, reflectance and/or emittance in a continual but reversible manner on application of voltage (electrochromism). This property enables an electrochromic device to be used for applications like smart glass, electrochromic mirrors, and electrochromic display devices.

An electrochromic device is described, e.g., in the paper "Silver grid electrodes for faster switching ITO free electrochromic devices" by António California et al., included herein by reference. The paper describes the preparation of an electrochromic device, in this case one which is ITO free.

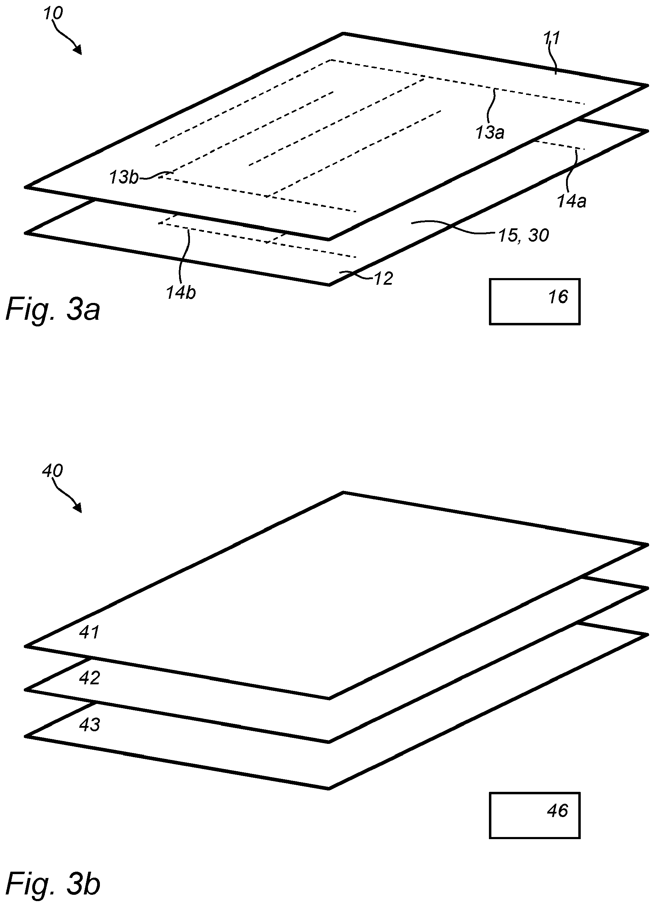

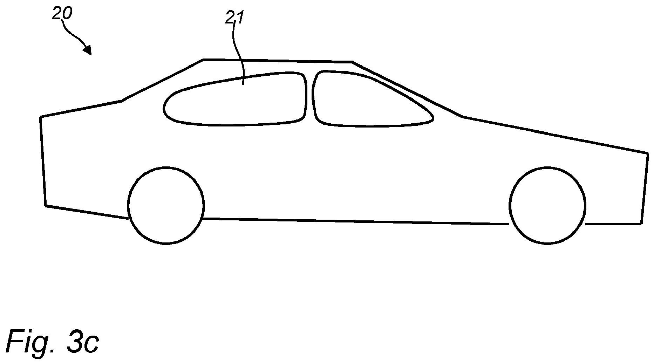

An electrochromic device uses electrically conductive electrodes applied on a substrate. The cited paper uses silver grids, made using silver ink, as electrically conductive electrodes. An electrochromic device may comprise an electrochromic material. The cited paper uses poly(3,4-ethylenedioxythiophene) polystyrene sulfonate (PEDOT:PSS). In an electrochromic device, at least one driving electrode, e.g., the electrically conductive electrode, is applied to a substrate. The driving electrode being arranged in a pattern across the substrate. The cited paper discloses two different grid patterns a regular hive and a regular ladder design. See table 1 and figure 3 of the cited paper.

Electrodes may be applied to a substrate by screen-printing on a substrate, in the case of the cited paper, polyethylene terephthalate (PET). The electrodes are typically an electrically conductive material, e.g., a metal or metal oxide. In the cited paper, silver ink was used to screen print the grids on PET using a RokuPrint RP 2.2 equipment and a 180 wired mesh. The samples were allowed to dry in an oven at 130 °C during 15 min. On top of these silver grids, one or two layers of PEDOT:PSS SV3 were posteriorly printed by screen printing. Patterned elements may be applied to the surface of the substrate altering the light interacting with the substrate, e.g., forming a metasurface.

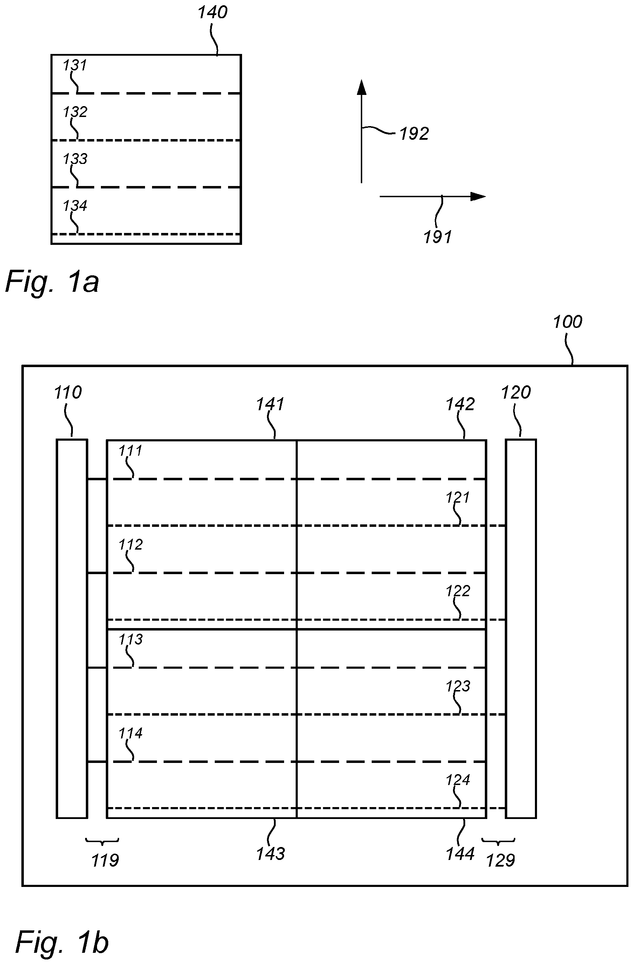

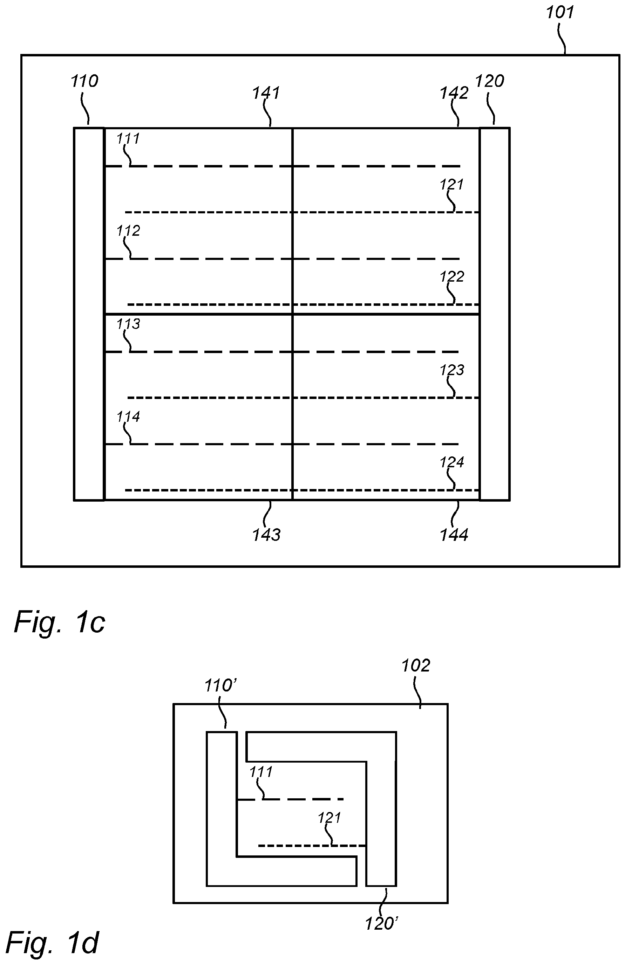

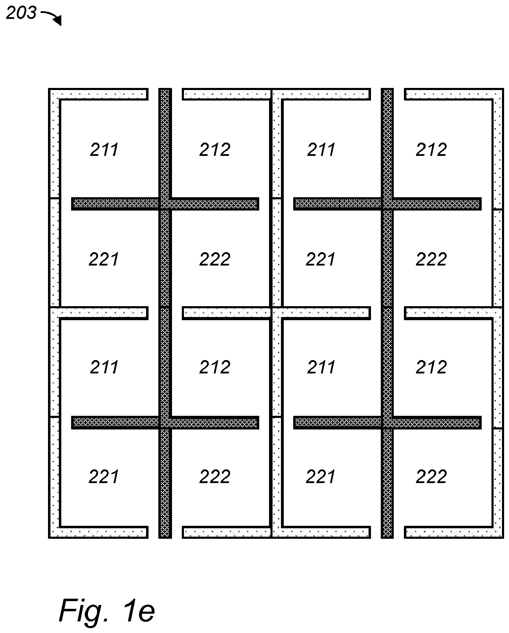

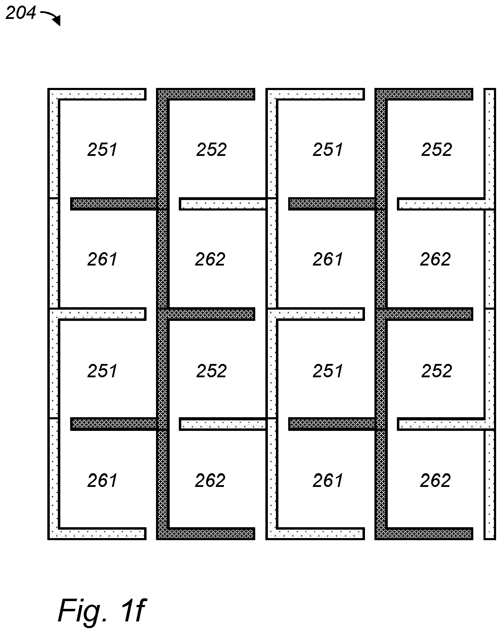

Another example of an electrochromic device is given in US patent 5161048, with title "Electrochromic window with metal grid counter electrode and acidic polyelectrolyte", included herein by reference. For example, an electrochromic device, may comprise a transparent electrochromic film and an ion-conductive layer disposed between a pair of electrodes. The metal grid electrode is issued for the electrodes. Figure 1 of the patent shows a metal grid according to the cited patent. To form the counter electrode, a metal grid is disposed adjacent to the second glass substrate.

For example, in an embodiment of an electrochromic device, the electrochromic device may comprise a transparent substrate, an electroconductive electrode member, a transparent electrochromic film in contact with said electroconductive electrode member, an ion-conductive polymer in contact with said electrochromic film; and a patterned conductive electrode in contact with said ion-conductive polymer. The patterned conductive electrode may be according to an embodiment.

A substrate according to an embodiment can be beneficially applied in a number of other technologies. For example, the light modulator may be dielectrophoretic light modulator, e.g., as shown in US20050185104 A1, included herein by reference. A substrate as in an embodiment may also be used in other electrowetting and OLED applications.

In OLED and electrowetting one needs electrodes on only one of the substrates. The substrate with electrodes may be according to an embodiment.

In an application of the light modulator for glazing both substrates are typically transparent. In other application, e.g., in television, e-readers, etc., only one substrate may be transparent.

In an embodiment, the substrate has patterned elements applied to a surface of the substrate to alter, e.g., correct, light interacting with the substrate.

In figures 1a-4c the nanoelements are not visible in the figures.

**Figure 1b** schematically shows an example of an embodiment of a substrate. The substrate is in particular useful for use in light modulator, e.g., of a kind described herein. Across the substrate multiple interdigitated driving electrodes are applied to the substrate. Shown in figure 1b are two electrodes.

The motivating example use of the substrate is in an electrophoretic light modulator. Typically, an electrophoretic light modulator comprising at least two substrates, each having at least two driving electrodes; this is not necessary though, for example, an electrophoretic light modulator may comprise a single substrate with 2 electrodes and an opposite substrate with 1 electrode. In any case, preferably, at least one of the substrates in the light modulator is according to an embodiment.

An embodiment of a light modulator comprises a first substrate according to an embodiment and a second substrate. The first and second substrates are arranged with inner sides opposite to each other. At least one driving electrode is applied to the inner side of the first substrate. An optical layer is arranged between the first and second substrates. A controller is configured to apply an electric potential to the at least one driving electrode causing modulation of the optical properties of the light modulator. One or both of the first and second substrates are transparent and/or translucent.

There are many different kinds of light modulators that use at least one driving electrode applied to a substrate. As light is transmitted through the substrate, interference is a general problem in the field of light modulators. The optical layer and controller may be arranged to modulate optical properties using effects that depend on the potential on the driving electrode; examples including the dielectrophoretic effect and the electrophoretic effect. For example, optical modulation may comprise the modulation of particles arranged in the optical layer. The number of driving electrodes may range from one on a single substrate, to multiple driving electrodes on one or both substrates.

The optical layer arranged between the first and second substrates may comprise particles, e.g., suspended in a fluid. The controller may be configured to apply an electric potential to the driving electrodes causing the particles to move thus modulating the optical properties of the light modulator.

In an embodiment, the particles comprise electrically charged or chargeable particles, and the controller is configured to apply an electric potential to the driving electrode to obtain an electro-magnetic field providing electrophoretic movement of the particles. In an embodiment, the electro-magnetic field is arranged between at least two driving electrodes arranged on the same substrate or arranged on different substrates.

In an embodiment, the particles comprise dielectric particles, and the controller is configured to apply an electric potential to the driving electrode to apply an electric field gradient to the particles enabling the particles to be moved under the action of dielectrophoretic forces.

The controller may apply an electric signal to one or more of the driving electrodes. Embodiments that control dielectrophoretic forces may use a signal that comprises a DC signal and/or an AC signal. Embodiments that control electrophoretic forces, may use a signal that comprises a DC signal and/or an AC signal.

Shown in figure 1b are two driving electrodes on the same surface. The two driving electrodes are indicated in figure 1b in two different dashing styles. There could be more than two electrodes on the same side of the substrate, e.g., to facilitate more fine-grained control of voltage differences across the substrate. The driving electrodes are applied to a same side of the substrate. Applying electrodes to a substrate may be done lithographically, e.g., using a mask representing the electrodes pattern. Electrodes may also be applied by embedding them in the substrate.

A driving electrode is electrically connected, e.g., has same electric potential everywhere. A driving electrode may comprise driving busses and main lines. At least, the main lines are interdigitated with main lines of a further driving electrode. Typically, the driving electrodes extend in a substantially straight line across the substrate, while the main lines are convoluted.

In an embodiment, the two substrates of a light modulator each have two electrodes arranged at its inner surface. Though, as mentioned, multiple electrodes on one or both substrates is not needed. For example, an embodiment of a light modulator comprises a first substrate and a second substrate. For example, the first substrate may comprise one driving electrode, the second substrate may not comprise driving electrodes. For example, the first substrate may comprise two driving electrodes, the second substrate may comprise one driving electrode. For example, the first substrate may comprise two driving electrodes, the second substrate may comprise two driving electrodes. For example, the first substrate may comprise more than two driving electrodes, the second substrate may comprise two or more driving electrodes.

Light modulators, wherein each substrate comprises two driving electrodes are used as a motivating example, though. Designs of substrates featuring two driving electrodes may be adapted to have a single driving electrode, e.g., by connecting the two driving electrodes, or by removing one of the driving electrodes. Adapting a substrate in such a manner may make it suitable for use in different technologies.

Each of the multiple driving electrodes are arranged in a pattern across the substrate. The multiple driving electrodes are arranged alternatingly with respect to each other on the substrate. Typically, a driving electrode comprises multiple main lines, that each stretch across the substrate. The main lines of the driving electrodes alternate, e.g., interdigitate. For example, in figure 1b the first driving electrode comprises main lines 111-114, and the second driving electrode comprises main lines 121-124. The driving electrodes are each driven by its driving bus. Figure 1b shows two driving buses: driving bus 110 and driving bus 120. The driving electrodes also serve to connect the main lines together. For example, in figure 1b, the driving bus 110 drives and connects main lines 111-114; and the driving bus 120 drives and connects main lines 121-124. There can be more main lines than the four shown in this example. The use of main lines is advantageous as it reduces the length of the electrodes, but it is not necessary. A design using only one main line per driving electrode is possible, though having multiple is advantageous.

The multiple of main lines of the first and second electrode are arranged alternatingly with respect to each other on the substrate.

A motivating application for a substrate such as substrate 100 is in smart glazing, e.g., a light modulator, which may be applied in domestic housing, offices, green houses, cars, and the like. The level of transparency or reflectivity of the smart glazing can be adapted electrically. For example, in smart glazing two substrates such as substrate 100 would be stacked so that the sides on which the two electrodes are applied face each other. A fluid with particles is enclosed between the two substrates. Smart-glazing embodiments are further discussed below. In an embodiment, electrodes, e.g., two or more electrodes are applied to one surface of each substrate. There could also be one, two or more electrodes on the other surface of substrate 100, e.g., to facilitate stacking of three or more substrates.

Some embodiments below show examples of modulating a transparency or reflectivity level. Light modulators may be adapted for other optical effects. For example, if desired, embodiments could be modified to different levels of translucency instead of different levels of transparency. If desired, the type of particle that is used in an embodiment can be varied, e.g., to particles that differ in which wavelengths they absorb or reflect, and how specular of diffuse the reflection is. For example, in an embodiment, a light modulator can modulate different levels of reflection. Particles can also emit light. Stacking multiple optical layers further increases the possibilities.

Having two sets of alternating main lines is sufficient to provide electrically adaptable glazing; due to the alternating two sets the electric field at any part of the substrate can be controlled as two opposite electrodes border the part from two opposing sides.

Interestingly, the pattern in which the driving electrodes stretch across the substrate is created by multiple repeated building blocks. Shown in figure 1b, the driving electrodes on substrate 100 shows four blocks: blocks 141, 142, 143 and 144 which are all substantially the same. The number of building blocks may be larger than four. The building blocks repeat in both directions across the substrate, e.g., a first direction 191, e.g., an x-direction, shown horizontally in the figure, and a second direction 192, e.g., a y-direction, shown vertically in the figure. Using building blocks is advantageous as it allows manufacture using a stepper machine; using building blocks is not necessary.

For example, **figure 1a** schematically shows an example of an embodiment of a building block 140. Building block 140 comprises multiple interdigitated electrodes extending in at least 2 directions across the building block. Shown in figure 1a are four electrodes: electrode 131-134. When the building blocks are repeated across a substrate in two directions, the electrodes in the building block will form the driving electrodes, e.g., form the multiple main lines of the driving electrodes. Note that the building blocks are typically connected in a substrate-electrode design tool. Typically, a building block comprise more than four electrode lines. For example, in a range of embodiments between 8 and 12 main lines are used. The number of electrode lines can be much higher though. For example, a building block may comprise many short electrode lines near the edges that connect to lines of other building blocks when the block is repeated. Taking such short offshoots into account, the number of lines could go up to, say, 50. Clearly, when using larger building blocks, the number of electrode lines may go up as well. In an embodiment, the number of electrode lines in a building block is between 8 and 50, or between 8 and 25, etc.

The driving electrodes that are formed by repeating building blocks are connected to the driving busses. Typically, electrode lines in a building block are connected to electrode lines in neighboring blocks by mering corresponding electrode lines; this is not necessary though, between repeated building blocks connection zones can be inserted that connect corresponding electrode lines.

This step can connect up multiple of the main lines together thus forming a single driving electrode. Figure 1b shows two connecting zones 119 and 129 in which the main lines belonging to the same driving electrode are connected to driving bus 110 and driving bus 120, respectively.

The electrodes that are shown in figure 1a are alternately dashed in the same dashing style of figure 1b. Indeed, it happens to be the case in this example, that a particular electrode of the building block of figure 1a will always end up in the first driving electrode or in the second electrode, e.g., as indicated in this case by the dashing style. This is however not necessarily the case. An electrode in a building block may end up as part of the first driving electrode or as part of the second driving electrode. This can change, e.g., as a result of the parity of the number of electrodes in the building block, the pattern in which the building blocks are repeated, etc.

For example, a particular pattern of repeated building blocks may be used for a light modulator with two driving electrodes, in which one might assign alternating main lines to the two driving electrodes. However, the same pattern of repeated building blocks may be used for a light modulator with three driving electrodes, in which one might assign every next set of three main lines to the three driving electrodes.

Furthermore, the building block shown in figure 1a is square, but this is also not needed. For example, a building block may be rectangular. In an embodiment, building block shape(s) could form a so-called tessellation. For example, a building block may be a triangle, a hexagon or even a combination of plane-filling shapes.

As said, figures 1a and 1b are schematic. This is especially the case for the depiction of the electrodes. An electrode as shown in figure 1a is straight, however, in an embodiment, an electrode on the building block is more convoluted, e.g., curved. By adapting the shape of the electrodes undesirable diffraction effects can be altered.

In an embodiment, a dimmable mirror comprises a light modulator according to an embodiment. For example, the dimmable mirror comprises a transparent substrate, an optical layer, and a reflective substrate. One or both of the substrates is according to an embodiment. The dimmable mirror may be electrophoretic. Typically, each substrate has two electrodes, but this is not necessary.

**Figure 1c** schematically shows an example of an embodiment of a substrate 101. Substrate 101 is similar to that of substrate 100, except for how the main lines are connected that formed from the electrodes on the building blocks to the driving buses. In figure 1a, a connection zone is inserted between the repeated building blocks and the driving buses 110 and 120. In the connection zone, the main lines belonging to the same driving electrode are connected to the same driving bus. In figure 1c, the driving bus are directly adjacent to the building blocks. To avoid that a driving bus would connect to main line of a different driving electrode, some of the building blocks are modified.

For example, building block 141 may be a copy of building block 140, but the electrode 134 is shortened so that the main line 122 of which line 134 is a part does not connect to bus 110. In figure 1c the building blocks are substantially the same except that a disconnect is introduced in some electrodes of building blocks next to the driving bus to avoid connecting a main line with the driving bus. Although all building blocks shown in figure 1c are modified in this way, in an embodiment the majority of building blocks would not be modified, e.g., the building blocks that are not adjacent to driving busses 110, 120.

**Figure 1d** schematically shows an example of an embodiment of a substrate 102. In an embodiment, the electrodes in a building block each connect the same opposite sides of the building block. This has the consequence that the main lines that are formed by the electrodes on the building block connect opposite sides of the substrate. In such a situation having only two driving buses, e.g., each extending along an opposite side of the substrate, is sufficient to connect and drive the driving electrodes.

It is however not required for the electrodes in a building block to connect opposite sides of the building block. Although typically all electrodes in a building block will connect two sides of the building block, it is not required that these two sides are opposite. The reasons for this, is that an electrode may be continued by a next building block. In such a situation most main lines will still connect the same two opposite sides, but at the edge of the substrate this may not happen, as there are no further building blocks there to carry the electrode forward. To allow for more intricate electrode designs on the building blocks, the main line may be connected to a driving bus from two sides, e.g., two sides of the substrate that are adjacent to the same corner of the substrate.

Shown in figure 1d, is a driving bus 110' extending along two sides of the substrate and a driving bus 120' extending along the other two sides of the substrate.

An advantage of this configuration is that the driving buses can be made in the same plane. This is not necessary though. A driving bus could connect from three or all four sides if desired, e.g., to further increase design freedom for the building blocks. Various examples are given herein.

Note that driving electrodes, e.g., driving busses, and/or main lines are allowed to overlap. This is possible, e.g., by causing a part of dielectric material between the electrodes. For example, such overlapping electrodes could be partly or fully in different planes of the substrate.

For example, in an embodiment one might depose the first driving electrode. Then locally depose a dielectric, and finally depose a second driving electrode. The dielectric is arranged to cover at least the points where the first and second electrode cross. A via could be used to the lower first driving electrode, e.g., to connect to it. The deposing of the driving electrodes may include the deposing of the driving busses.

**Figure 1e** schematically shows an example of an embodiment of a substrate 203. In figure 1e, a building block has been copied multiple times.

Building block 211 has been mirrored in the y-direction to form building block 221. Building block 221 has been arranged directly at the bottom of building block 211. Building block 211 has been mirrored in the x-direction to form building block 212. Building block 212 has been arranged directly at the right of building block 211. Building block 211 has been mirrored in the x-direction as well as in the y-direction to form building block 222. For example, the mirroring may have as mirroring axis a side of the building block.

By mirroring the building block it is ensured that driving busses of the same driving electrode end up next to each other on the substrate.

**Figure 1f** schematically shows an example of an embodiment of a substrate 204. In substrate 204 the building block is repeated across the substrate, in a different manner. Building block 251 has been mirrored in the y-direction to form building block 261. Building block 261 has been arranged directly at the bottom of building block 251. Building block 251 has been point reflected, e.g., rotated over 180 degree, to form building block 252. Building block 252 has been arranged directly at the right of building block 251. Building block 251 has been mirrored in the x-direction to form building block 262.

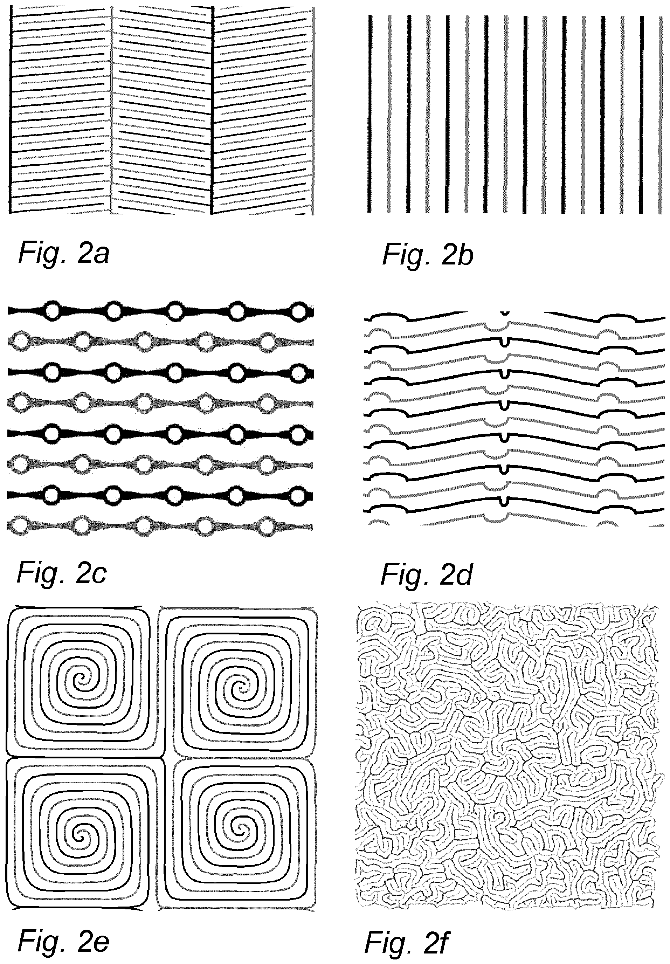

**Figures 2a-2f** schematically show examples of substrates with interdigitated electrodes. These may be embodied on a substrate with two electrodes, e.g., by alternatingly connected electrodes. Figures 2a-2d may also be embodied on a substrate with multiple electrodes, e.g., by connecting in sequences of 3 or 4 or more electrodes.

Figures 2e and 2f show designs with two driving electrodes on the surface of the substrate. Either design could be modified to have only a single driving electrodes on the surface of the substrate, e.g., by removing one of the two driving electrodes. For example, such a modified design could be used in a light modulator that uses a substrate with a single electrode.

The designs shown can be realized in a single plane, without having crossing electrodes. In particular if these designs are connected to two driving buses, no crossing electrodes are needed. When more than two driving electrodes are used, or if more complicated electrode patterns are used, then crossing of the electrodes may be used, or may even become necessary. Such crossings are possible however for example, at the location where two electrode lines cross a dielectric material may be arranged between the electrodes. For example, such an insulator may be deposited at the crossing location. For example, a first driving electrode is in a first plane of the substrate and a second driving electrode is in a second plane of the substrate.

Two substrates according to an embodiment may be combined to form a light modulator. The light modulator is particularly suited to glazing. An exemplary embodiment of a light modulator is shown below.

**Figure 3a** schematically shows an embodiment of a light modulator 10, which may be applied in smart glazing.

Reference is made to patent application PCT/EP2020/052379, which is included herein by reference; this application comprises advantageous designs for light modulator, which may be further improved, e.g., by including electrodes, building blocks, and/or substrates as explained herein.

Light modulator 10 can be switched electronically between a transparent state and a non-transparent state and vice versa, or between a reflective state and a non-reflective state and vice versa. Light modulator 10 comprises a first substrate 11 and a second substrate 12 arranged opposite to each other. On an inner-side of first substrate 11 at least two electrodes are applied: shown are electrodes 13a, 13b. These at least two electrodes are together referred to as electrodes 13. On an inner-side of second substrate 12 at least two electrodes are applied: shown are electrodes 14a, 14b. These at least two electrodes are together referred to as electrodes 14.

A fluid 15 is provided in between said substrate. The fluid comprises particles 30, e.g., nanoparticles and/or microparticles, wherein the particles are electrically charged or chargeable. For example, particles may carry a charge on their surface intrinsically. For example, the particle may be surrounded by a charged molecule.

The electrodes are arranged for driving particles 30 to move towards or away from electrodes, depending on the electric field applied. The optical properties, in particular the transparency or reflectivity of the light modulator depends on the location of particles 30 in the fluid. For example, a connection may be provided for applying an electro-magnetic field to the electrodes.

At least one, but preferably both electrodes 13 and 14 are according to an embodiment, though they are shown schematically in the figures.

In an embodiment, at least one of the electrode pattern on the first substrate and the electrode pattern on the second substrate have a low calculated pixelated noise metric which contributes to diffraction. Interestingly, the electrode patterns on the substrates might not satisfy the bound on their pixelated noise metric individually, but their combination might, that is their superimposition. As this is the pattern that would be visible when looking through the light modulator, a low pixelated noise metric in the superimposition would also contribute to low diffraction. Suitable bounds for the patterns on the first and/or second substrate or for the superimposition include: below 6.05%, or 5%, or 4%

In an example, substrate 11 and substrate 12 may be optically transparent outside of the electrodes, typically > 95% transparent at relevant wavelengths, such as >99% transparent. Taking electrodes into account, transparency can be much lower, e.g., 70%. The term "optical" may relate to wavelengths visible to a human eye (about 380 nm-about 750 nm), where applicable, and may relate to a broader range of wavelengths, including infrared (about 750 nm - 1 µm) and ultraviolet (about 10 nm-380 nm), and sub-selections thereof, where applicable. In an exemplary embodiment of the light modulator a substrate material is selected from glass, and polymer.

In another example, one substrate, such as a bottom substrate 12, may be reflective or partially reflective, while the top substrate 11 is transparent. The optical properties, in particular the reflectivity of the light modulator depends on the location of particles 30 in the fluid. When the panel is in the open state (vertical drive), the particles will mostly be located between opposite electrodes of the two substrates, such that incident light can pass through the transparent top substrate and the optical layer relatively unhindered, and is reflected or partially reflected on the bottom substrate.

The distance between the first and second substrate is typically smaller than 30 µm, such as 15 µm. In an exemplary embodiment of the light modulator a distance between the first and second substrate is smaller than 500 µm, preferably smaller than 200 µm, preferably less than 100 µm, even more preferably less than 50 µm, such as less than 30 µm.

In an example the modulator may be provided in a flexible polymer, and the remainder of the device may be provided in glass. The glass may be rigid glass or flexible glass. If required, a protection layer may be provided on the substrate. If more than one color is provided, more than one layer of flexible polymer may be provided. The polymer may be polyethylene naphthalate (PEN), polyethylene terephthalate (PET) (optionally having a SiN layer), polyethylene (PE), etc. In a further example the device may be provided in at least one flexible polymer. As such the modulator may be attached to any surface, such as by using an adhesive.

Particles 30 may be adapted to absorb light and therewith preventing certain wavelengths from passing through. Particles 30 may reflect light; for example, the reflecting may be specular, diffusive, or in between. A particle may absorb some wavelengths, and reflect others. Particles may also or instead emit light, e.g., using phosphorescence, fluorescence, or the like. Even the fluid may emit light, which emittance is modulated by changing the location of particles.

In an exemplary embodiment of the light modulator a size of the nanoparticles is from 20-1000 nm, preferably 20-300 nm, more preferably smaller than 200 nm. In an exemplary embodiment of the light modulator the nanoparticles/microparticles may comprise a coating on a pigment, and preferably comprising a core. In an exemplary embodiment of the light modulator the coating of the particles is made from a material selected from conducting and semi-conducting materials.

In an exemplary embodiment of the light modulator the particles are adapted to absorb light with a wavelength of 10 nm-1 mm, such as 400-800 nm, 700 nm -1 µm, and 10-400 nm, and/or are adapted to absorb a part of the light with a wavelength-range falling within 10 nm-1 mm (filter), and combinations thereof.

In an exemplary embodiment of the light modulator the particles are electrically charged or chargeable. For example, a charge on the particles may be 0.1 e to 10e per particle (5*10⁻⁷-0.1 C/m²).

In an exemplary embodiment of the light modulator the fluid is present in an amount of 1-1000 g/m², preferably 2-75 g/m², more preferably 20-50 g/m², such as 30-40 g/m². It is a big advantage that with the present layout much less fluid, and likewise particles, can be used.

In an exemplary embodiment of the light modulator the particles are present in an amount of 0.01-70 g/m², preferably 0.02-10 g/m², such as 0.1 -3 g/m².

In an exemplary embodiment of the light modulator the particles have a color selected from cyan, magenta, and yellow, and from black and white, and combinations thereof.

In an exemplary embodiment of the light modulator the fluid comprises one or more of a surfactant, an emulsifier, a polar compound, and a compound capable of forming a hydrogen bond.

Fluid 15 may be an apolar fluid with a dielectric constant less than 15. In an exemplary embodiment of the light modulator the fluid has a relative permittivity εr of less than 100, preferably less than 10, such as less than 5. In an exemplary embodiment of the light modulator, fluid 15 has a dynamic viscosity of above 10 mPa.s.

Electrodes 13a, 13b and electrodes 14a, 14b are in fluidic contact with the fluid. The fluid may be in direct contact the electrodes, or indirectly, e.g., the fluid may contact a second medium with the electrode, such as through a porous layer. In an embodiment, the electrodes cover about 1-30% of the substrate surface. In an embodiment, the electrodes comprise an electrically conducting material with a resistivity of less than 100 nΩm (at 273K; for comparison typically used ITO has 105 nΩm), which is similar to an electrical conductivity >1*10⁷ S/m at 20°C). In an embodiment of the light modulator electrodes comprise copper, silver, gold, aluminum, graphene, titanium, indium, and combinations thereof, preferably copper. The electrodes may be in the form of microwires embedded in a polymer-based substrate; for example, copper microwires.

A connection for applying an electro-magnetic field to the electrodes, wherein the applied electro-magnetic field to the electrodes provides movement of the nano- and microparticles from a first electrode to a second electrode and vice versa. A connection for applying an electro-magnetic field to the electrodes may be provided. For example, in an exemplary embodiment of the light modulator an electrical current is between -100-+100µA, preferably -30-+30 µA, more preferably -25-+25 µA. For example, a power provider may be in electrical connection with the at least two electrodes. The power provider may be adapted to provide a waveform power. At least one of amplitude, frequency, and phase may be adaptable to provide different states in the light modulator. For example, a controller may adapt aspects of the power.

Light modulator 10 may comprise one or more segments, a segment being a single optically switchable entity, which may vary in size. The substrates enclose a volume, which may be a segment, at least partly.

The present device may comprise a driver circuit for changing appearance of (individual) segments by applying an electro-magnetic field. As such also the appearance of the light modulator, or one or more parts thereof, may be changed. For example, a segment may have an area of at least 1mm². The present design allows for stacking to allow for more colors; e.g., for full color applications a stack of two or three modulators could provide most or all colors, respectively.

Having one or more segments allows the light modulator to be controlled locally; this is advantageous for some applications, but not necessary. For smart glazing, a light modulator may be used with or without segments. For example, applied in smart glazing, transparency or reflectivity may be controlled locally, e.g., to block a sun-patch without reducing transparency or reflectivity in the whole window. Segments may be relatively large, e.g., having a diameter of at least 1 mm, or at least 1 cm, etc.

In an exemplary embodiment of the light modulator substrates (11,12) are aligned, and/or electrodes (13,14) are aligned. For example, electrodes 13a, 13b and electrodes 14a, 14b may be aligned to be opposite each other. In aligned substrates, electrodes on different substrates fall behind each other when viewed in a direction orthogonal to the substrates. When the light modulator is disassembled, and the substrates are both arranged with electrodes face-up, then the electrode patterns are each other's mirror image.

Aligning substrates may increase the maximum transparency or reflectivity of the light modulator, on the other hand, when selecting a light modulator for more criteria than the range of transparency or reflectivity, etc., it may be better not to align or not fully align the two substrates. Light modulators can be stacked. For example, two stacked light modulators can be made from three substrates, wherein the middles one has electrodes on both its surfaces. In an embodiment of the light modulator optionally at least one substrate 11,12 of a first light modulator is the same as a substrate 11,12 of at least one second light modulator. For stacked modulators, alignment may also increase maximum transparency or reflectivity, but it may be detrimental to other considerations, e.g., diffraction.

**Figure 3b** schematically shows an example of an embodiment of a light modulator 40. Light modulator 40 is similar to light modulator 10, except that it comprises multiple optical layers; in the example as shown two optical layers. There may be more than two optical layers. Each optical layer is arranged between two substrates. Light modulator 40 can be regarded as a stack of two-substrate light modulators as in figure 3a. As shown, light modulator 40 comprises three substrates: first substrate 41, second substrate 42 and third substrate 43. Between substrates 41 and 42 is an optical layer, and between substrates 42 and 43 is an optical layer. The optical layers may be similar to those in light modulator 10. A controller 46 is configured to control electrical current on the electrodes of the substrates. For example, in figure 3b, controller 46 may be electrically connected to at least 4 times 2 equals 8 electrodes.

Interestingly, the particles in the multiple optical layers may be different so that the multiple layers may be used to control more optical properties of the light modulator. For example, particles in different optical layers may absorb or reflect at different wavelengths, e.g., may have a different color. This can be used to create different colors and/or different color intensities on the panel by controller 46. For example, a four-substrate panel may have three optical layers with different color particles, e.g., cyan, yellow, and magenta, respectively. By controlling the transparency or reflectivity for the different colors a wide color spectrum may be created.

The surfaces of the substrates that face another substrate may be supplied with two or more patterns, e.g., as in an embodiment. For example, the outer substrates 41 and 43 may receive electrodes only on an inner side, while the inner substrate, e.g., substrate 42, may have electrodes on both sides.

Substrates 41 and 42 may together be regarded as an embodiment of a light modulator. Likewise, substrates 42 and 43 may together be regarded as an embodiment of a light modulator.

**Figure 3c** schematically shows an example of an embodiment of a car 20 having smart glazing for windows 21. This is a particularly advantageous embodiment, since while driving the level of incident lighting can change often and rapidly. Using smart glazing in a car has the advantage that light levels can be maintained as a constant level by adjusting the transparency of the car windows. Moreover, the reduced diffraction effect improves safety as it reduces driver distraction. Car 20 may comprise a controller configured for controlling the transparency or reflectivity of windows 21.

The smart glazing can also be used in other glazing applications, especially, where the amount of incident light is variable, e.g., buildings, offices, houses, green houses, skylights. Skylights are windows arranged in the ceiling to allow sunlight to enter the room.

The light modulator may have two optical states, e.g., a transparent state and a non-transparent state, or a reflective state and a non-reflective state. The light modulator, e.g., light modulator 10 or light modulator 40 may be configured to
- switch to the second optical state, e.g., the non-transparent state or to the non-reflective state by creating an alternating voltage on at least one of the first and second substrates, applying an alternating current between at least a first electrode and a second electrode on the first substrate and/or between a first electrode and a second electrode on the second substrate, and
   - switch to the first optical state, e.g., the transparent state or to the reflective state by creating an alternating voltage between the first and second substrate, applying an alternating current between a first electrode on the first substrate and a first electrode on the second substrate, and/or between a second electrode on the first substrate and a second electrode on the second substrate.

The electrode pattern on the first substrate is arranged at least in part in the same pattern as a second electrode on the second substrate. Typically, the electrodes oppose each other, but the pattern of the first electrode and second electrode may also be shifted with respect to each other.

A protective coating may be provided on at least a part of the inner surface area of at least one of the first substrate and the second substrate is provided.

A driving signal applied to driving electrodes typically has a varying voltage. For example, a power provider may be operated at an AC frequency for switching to a transparent state or to a non-transparent state. Such a signal may have a frequency between, say, 1-1000 Hz. A balanced electrolysis current may be obtained by continuously switching the polarity of oppositely charged electrodes on the first and on the second substrates and/or between the first and the second substrates.

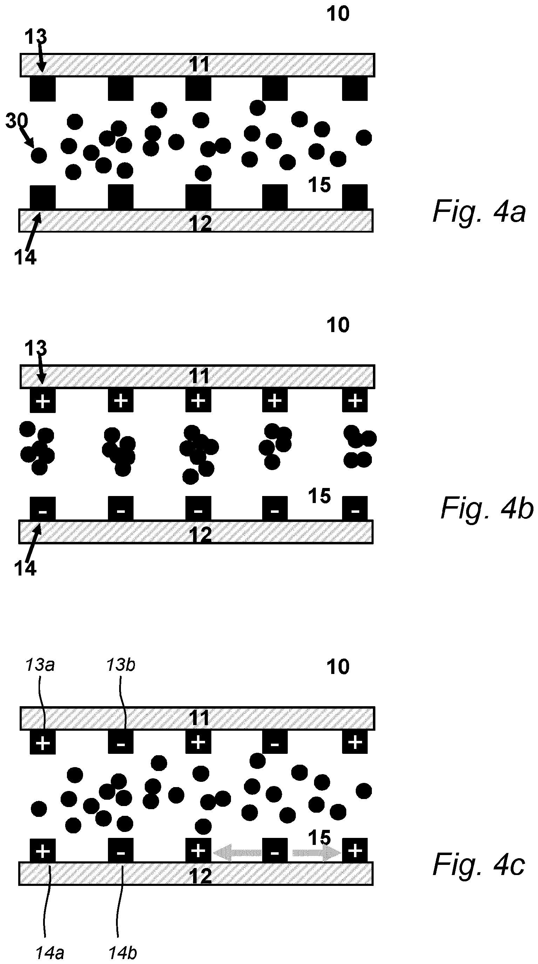

**Figures 4a-4b** schematically show a side view of an embodiment of a light modulator in use. Applying an electric field to the electrodes on the substrates causes an electrical force on the particles. Using this effect, the particles can be moved around and so different transparency or reflectivity states can be caused in the light modulator. A controller may control the electric field, e.g., its amplitude, frequency, and phase. In an embodiment, the controller is connected to at least four electrodes: two for each substrate. But more electrodes may be used and connected to the controller; for example, more than 2 electrodes may be used for a substrate to better fine-tune gray scaling, and driving to non-transparent or non-reflective state. Multiple electrodes may also be used to support multiple segments on the substrate.

**Figure 4a** shows the light modulator without an electric field being applied. No electric force is yet applied on particles 30 suspended in fluid 15, in figure 4a.

In the configuration shown in figure 4a, a conducting electrode pattern, arranged on the top substrate is completely or substantially aligned with a conducting electrode pattern on the bottom substrate. The conducting electrode pattern may be deposited on a transparent or (partially) reflective glass substrate or may be embedded in a plastics substrate, etc.

Alignment between the top-electrode pattern and the bottom electrode pattern contributes to a wider range of achievable levels of transparency or reflectivity. However, alignment is not needed, as similar effects can be obtained without alignment. Without alignment, a range of transparency or reflectivity is likewise obtained.

Note that in these examples, reference is made to the top substrate and the bottom substrate to refer to substrate that is higher or lower on the page. The same substrates could also be referred to, e.g., as the front substrate and back substrate, since in a glazing application, the substrates would be aligned vertically rather than horizontally.

**Figure 4b** shows the light modulator wherein, say at an instance P1, a potential +V1 is applied to each microwire electrode on the top substrate, while a negative voltage, say -V1, is applied to each microwire electrode of the bottom substrate. Thus, in this case, the same positive potential is applied to all electrodes 13, and the same negative potential is applied to electrodes 14. The difference in potential causes negatively charged particles to flow to the vicinity of the electrodes of the top substrate, where the particles will substantially align with the top electrodes. As a result, if both the top and bottom substrate are transparent, the transparency of light modulator 10 will increase. Likewise, if, e.g., the top substrate is transparent and the bottom substrate is reflective, the reflectivity of light modulator 10 will increase If the solution contains positively charged particles they will flow to the vicinity of the electrodes of the bottom substrate, where those particles will substantially align with the bottom electrodes.

A similar transparency or reflectivity can be achieved, when in a second instance, P2, of the on-state, the voltages of the top electrodes and bottom electrodes are reversed in contrast to the instance of P1. In the instance P2, the voltage of each electrode on of the top substrate are now supplied with a negative potential -V1 while the voltages of the aligned electrodes of the bottom substrate are supplied with a positive potential. This state is similar to the state shown in figure 4b, but with top and bottom substrates reversed. In this configuration, the transparency or reflectivity of light modulator 10 is also high.

Interestingly, by switching between a positive potential at electrodes at the top substrate, e.g., as shown as electrodes 13 in figure 4b (and a negative potential on electrodes 14), and a positive potential at electrodes at the bottom substrate, e.g., as shown as electrodes 14 in figure 4b, the transparency or reflectivity can be maintained, while decreasing corrosion damage to the electrodes. This alternating electric field can be achieved by applying alternating electric potentials to the top and bottom electrodes.

Applying a waveform is optional, but it is a useful measure to increase the lifetime of the light modulator by reducing corrosion. Corrosion can form for example, when using copper electrodes, since copper ions dissolve in an ionic fluid at one substrate and flow to electrode on the opposite substrate, where they deposit. By applying a waveform the direction of copper ion transport is frequently reversed, thus reducing corrosion damage. Between the two instances P1 and P2 the corrosion current between the two substrates is balanced or substantially, e.g., >95%, balanced, e.g., as corrosion rate of an electrode of the top plate occurs there is a balancing deposition of copper on the bottom electrode between each instance of time, P1 and vice versa in instance P2. Therefore, the particles are transitioning or migrating continuously between top and bottom electrode, and the light modulator or smart window is always in the on-state while the dynamic electrolysis current between the top and bottom electrode is constant thus there is no or a negligible net loss of electrode material on the top and bottom substrates.

**Figure 4c** shows how a state of decreased transparency or reflectivity can be obtained. An alternating voltage is applied on the same substrate. For example, in an embodiment a potential +V2 is applied a first electrode and the next immediate neighboring electrode has an opposite potential -V2 etc., as shown in fig. 8c. This can be obtained by applying the potential +V2 to electrode 13a and the opposite potential -V2 to electrode 13b. On the opposite substrate the potential +V2 may be applied to electrode 14a and the opposite potential -V2 to electrode 14b. For example, the electrodes may be arranged so that the electrodes on the substrates are aligned; an electrode on the top substrate having an opposite electrode on the bottom substrate, and vice versa. For example, to decrease transparency or reflectivity, the opposite electrode may receive the same potential, while neighboring electrodes receive an opposite potential. An embodiment is shown in figure 4c, wherein four electrodes are indicated with the reference numbers 13a, 13b, 14a and 14b, and the rest of the electrodes continue to alternate.

By using this AC drive cycle between top and bottom substrates, diagonal and lateral electric fields are generated between the two substrates thereby causing haphazard diffusion of the particles thereby creating the closed state of the light modulator. As a result of this configuration, the particles migrate diagonally and laterally between the top and bottom substrate and diffusion of particles into the visible aperture of the light modulator contributes to the closed, opaque state of the light modulator.

As for the transparent state shown in figure 4b, a waveform may be applied to the electrodes, e.g., so that electrodes that are shown in figure 4b with a positive potential become negative and vice versa. As in figure 4b applying a waveform, e.g., between electrodes 13a and 13b and between 14a and 14b reduces corrosion damage to the electrodes.

The AC drive cycle may be implemented by using an interdigitated line configuration combining the top and bottom electrode configuration shown in plan view in figures 1a, 1b, 2a-2f, etc.

The extent with which transparency or reflectivity is increased or decreased in figures 4b and 4c depends on the voltage and frequencies difference. By varying the voltage difference, the amount by which the transparency or reflectivity increases, respectively, decreases, is controlled. For example, a curve representing light transmission versus voltage may be determined, e.g., measured. To obtain a particular level of light transmission, e.g., a particular transparency, e.g., a particular grayscale level, the corresponding voltage, e.g., AC voltage may be applied. By interpolating the signals for a transparent or for a non-transparent state, levels in between transparent and non-transparent may be obtained. Likewise, a curve representing light reflection versus voltage may be determined, e.g., measured. To obtain a particular level of reflectivity, the corresponding voltage, e.g., AC voltage may be applied. By interpolating the signals for a reflective or for a non-reflective state, levels in between reflective and non-reflective may be obtained.

Different electrode patterns may be used, for a light modulator. The electrode patterns may each provide a range of grayscales, e.g., levels of transparency or reflectivity, that the light modulator can attain. However, the particular range of grayscale for any particular electrode pattern may be different from another electrode pattern. In other words, although different patterns give an increased transparency or reflectivity or an increased opacity, the exact response to a drive signal depends on many factors, including the particular pattern that is used. The variations in the optical properties of a light modulator may have a fine resolution, e.g., below 1mm. Note that no pixilation of the light modulator is needed to achieve different optical patterns, e.g., logos, visible in the light modulator.

This effect may be used to embed visible images in the light modulator by locally changing the electrode pattern on the substrates of a light modulator. For example, one may locally have grayscales that have a permanent off-set in grayscale relative to each other, because of a different electrode pattern. For example, by locally changing the electrode pattern or its pitch, the maximum transparency or reflectivity can be altered.

The result is an area on the light modulator which has a different intensity of grayscale, e.g., a different grayscale, or of coloring. The area may have the same color-point, though. In an embodiment, they may switch together with the rest of the window, although at a different rate. For example, even if the same voltage is applied to the electrodes in two different areas, they cause a different transparency state, e.g., different transmission level, due to different electrode patterns. For example, a curve representing transmission versus voltage may be shifted. For example, if voltage control is changed in the same way in both areas, then in both areas light transmission may change, but with a different amount. An area may also be made less response to a drive signal by reducing the density of electrodes; in particular, an area may be made not to switch at all, e.g., by not applying electrodes in the area.

For example, the electrode material may be copper, aluminum, gold, indium-tin oxide (ITO), etc. ITO is transparent while Cu/AI is reflective, thus using a different electrode material, a different appearance may be obtained, irrespective of the voltage driving. Likewise, different materials with a different resistance, will give rise to a different electric field. For example, ITO will have a smaller electric field, even though driven with the same voltage.

An embodiment of a method of modulating light, comprises applying an electric potential to multiple driving electrodes applied to two opposing substrates according to an embodiment to obtain an electro-magnetic field between the multiple driving electrodes providing electrophoretic movement of the particles towards or from one of the multiple driving electrodes causing modulation of light shining through the substrates, wherein the two opposing substrates are as in an embodiment.

A light modulator is described herein that comprises a first substrate according to an embodiment. For example, the first substrate may be transparent, have a driving electrode applied to it and patterned elements. The driving electrode may be configured for electrophoretic and/or dielectrophoretic control of particles in an optical layer of the light modulator.

The light modulator may comprise a second substrate. The second substrate may also have patterned elements, or may be a conventional substrate without patterned elements. Having patterned elements in at least one substrate, e.g., the first substrate, provides control over light diffraction and is an improvement over known light modulators. Having two substrates, e.g., the first and second substrate, with optically active elements provides even additional control.

In an embodiment, the second substrate could be non-transparent, e.g., opaque. For example, such an embodiment may be used for a dynamic mirror, or e-reading, system. Typically, especially in smart glazing applications, both the first and second substrate are transparent.

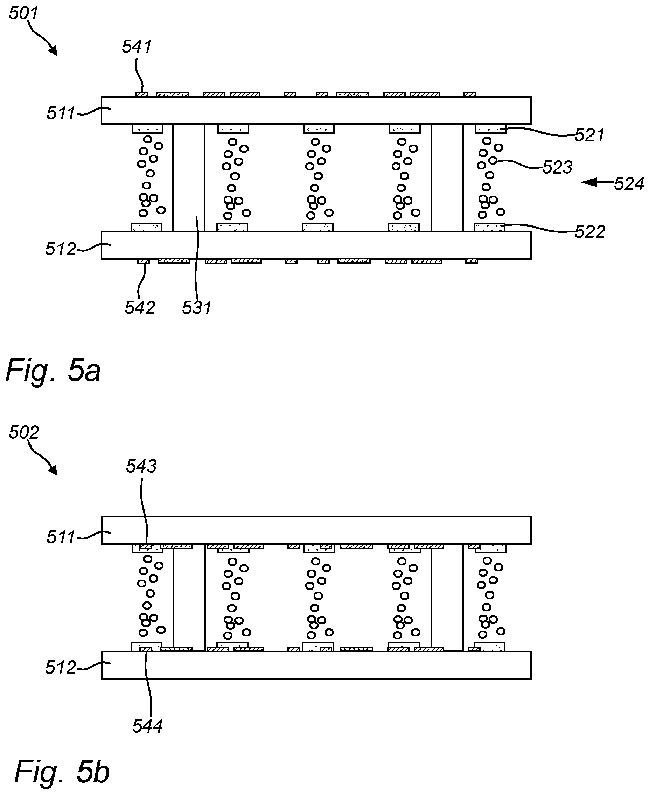

**Figure 5a** schematically shows an example of an embodiment of a light modulator 501. Light modulator 501 comprises a first transparent substrate 511 and a second transparent substrate 512. Between first transparent substrate 511 and second transparent substrate 512 an optical layer 524 extends. In the optical layer 524 are particles 523 that affect the optical appearance of the light modulator. On first substrate 511 at least one driving electrode 521 is applied. The optical properties of the light modulator are modifiable by applying an electric potential to the at least one driving electrode 521. In the shown example, at least one driving electrode 522 is applied on second substrate 512 as well.

The light modulator is shown in a state in which the particles align with the electrodes. This typically corresponds to the most transparent state of the light modulator. In another state of the light modulator, the particles may be dispersed through the optical layer 524. This typically corresponds to the least transparent state of the light modulator. Depending on the properties of the particles, this could be an opaque state, e.g., absorbing light, or this could be a reflective state, e.g., reflecting light.

The surface of substrate 511 or 512 that is turned towards optical layer 524, is referred to as the first surface.

At least one driving electrode 521 is arranged in a pattern across substrate 511. At least one electrode 521 is arranged to receive an electric potential causing modulation of the optical properties of the light modulator. At least one driving electrode 522 is arranged in a pattern across substrate 512. At least one electrode 522 is arranged to receive an electric potential causing modulation of the optical properties of the light modulator.

In a preferred light modulator, e.g., a preferred implementation of the light modulator shown in figure 5a, at least two driving electrodes are applied on first substrate 511, and at least two driving electrodes are applied on second substrate 512. In this preferred light modulator, particles 523 in optical layer 524 are charged and movable under the electrophoretic force which can be modified by the electrodes on the substrates.

Patterned elements 541 are applied to a surface of substrate 511 altering the phase, amplitude, and/or polarization of light interacting with the substrate. That is the surface of substrate 511 is configured with optical properties turning the substrate in a so called metasurface. In this case, patterned elements 541 are applied to a second surface of substrate 511, e.g., the surface opposite to the surface that carries the at least one electrode 521. For example, patterned elements may be optical elements having a diameter parallel to the substrate of less than a micrometer. Patterning is the process of fabricating micro and/or nanostructures across the surface of the material, referred to as the substrate.

Patterned elements 542 are applied to a surface of the substrate 512 altering the phase, amplitude, and/or polarization of light interacting with the substrate. That is also substrate 512 is provided with a metasurface. In this case, patterned elements 542 are applied to a second surface of substrate 512, e.g., the surface opposite to the surface that carries the at least one electrode 522. It is not necessary to have patterned elements 542 on the second substrate, though this is advantageous as it provides more control.

Micro and/or nanopatterning is the process of fabricating nanostructures across the surface of the material, referred to as the substrate.

Light modulator 501 further shows spacers 531. The spacers ensure that the light modulator stay at the desired distance from each other. For example, a spacer may be manufactured from the same material as the substrate, and a number of spacers could be distributed across the substrate. Spacers are optional; for example, instead of a spacer a border can be arranged around the substrate to keep the substrates at a particular desired distance.

An advantage of arranging the nanoparticles on a second surface of the substrate, e.g., not on the same side of the surface having the driving electrodes is that the distribution of the optical elements does not interfere with the light electrodes and vice versa.

**Figure 5b** schematically shows an example of an embodiment of a light modulator 502. Light modulator 502 is similar to light modulator 501 except that in this example, the patterned elements are arranged on the same size as the driving electrodes. Figure 5b shows patterned elements 543 on the first surface of substrate 511. Figure 5b shows patterned elements 544 on the first surface of substrate 512.

Having patterned elements on the same side as the surface allows the patterned elements to face the optical layer. This protects the patterned elements from damage, e.g., abrasion.

In the example shown in figure 5b both substrates are provided with patterned elements, it is not necessary for both substrates to be so provided.

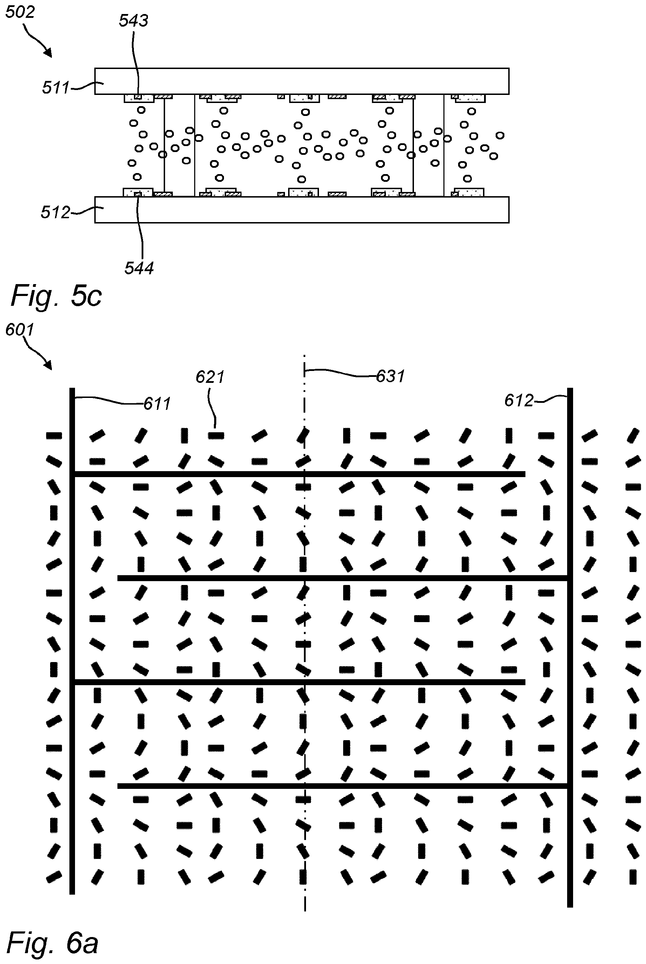

Figure 5c schematically shows an example of an embodiment of a light modulator. The light modulator shown in figure 5c is the same as the one in figure 5b, except that the position of the particles in the optical layer has changed. This may be done by applying a control signal to the driving electrodes applied to the electrodes on the substrate(s). Note that as a result the optical effect of the patterned elements may change. There are various ways to deal with this. A first option is to accept this effect. In this case, the patterned elements may be optimized for an average case, and/or, commonly occurring situations, e.g., maximally transparent, maximally opaque. A second option is to also apply a control signal to the patterned elements to modify their effect, e.g., to create a countervailing effect in the patterned elements.

**Figure 6a** schematically shows an example of an embodiment of a transparent substrate 601 for use in a light modulator, e.g., light modulator 501, light modulator 502, or any other light modulator according to an embodiment.

Substrate 601 schematically shows two driving electrodes: driving electrode 611 and driving electrode 612. The two driving electrodes are arranged in an interdigitated pattern. Accordingly, across the substrate local control over the electric field can be exerted, and thus local control over the electrophoretic movement of particles. Meta surfaces are also applicable in other types of light modulators.

Shown in figure 6a are patterned elements. The patterned elements are arranged in a pattern across the substrate according to the particular optical effect that is desired. Also shown in figure 6a is a virtual cutting line 631. The light modulators 501 and 502 may be regarded as cross-sections across line 631. Note that the spacers 531 are not shown in figure 6a.

Patterned elements, e.g., as shown in figure 6a, 5a, 5b and elsewhere, are two or three-dimensional objects that have a nanometric geometric shape. Typically, the patterned elements project from the surface. The shape and distribution of the patterned elements change the optical properties of the substrate. This is sometimes referred to as a metasurface. The optical properties of the meta surface can be computed using optical simulation software.

The patterned elements on the substrate may have multiple different sizes, different shapes, and/or different materials. For example, a patterned element may be obtained by shifting a 2-dimensional shape, parallel to the substrate, into a third dimension, away from the substrate surface. For example, the 2-dimensional shape may be a polygon, a circle, an oval, and the like. The shape of the patterned elements may vary in the third-dimension. The patterned elements may be cylindrical, elongated, and/or curved.

The patterned elements may extend from the surface, having a height of less than 1000 nanometer, preferably, a height between 100 and 1000 nanometer, e.g., 600 nanometer.

For example, the light modulator may be arranged for use within a defined spectral range, such as visible light. The patterned elements may be transparent within the defined spectral range, e.g., transparent to visible light. The spectral range for visible light may be defined as 400-750 nm. The patterned elements may be used to configure the spectral properties of the light modulator.

The patterned elements may have a total transmittance within the defined spectral range above a threshold, e.g., at least 70%, e.g., at least 80%. The total transmittance of the patterned elements may be in the range [x-5, x+5] wherein x is the total transmittance of the substrate.

Interestingly, the patterned elements do not need to be transparent. In an embodiment, the wherein the patterned elements have a total transmittance within the spectral range of at most 10%.

The spectral range may comprise infrared light, e.g., with a wavelength between 750 and 1000, or 1500 nanometer. The spectral range may comprise visible light and infrared light, e.g., with a wavelength between 400 and 1000, or 1500 nanometer.

The patterned elements are placed in the path of light passing through the substrates and the optical layer. As the patterned elements optically affect said light, they affect the optical properties of the light modulator. Accordingly, by arranging the shape and/or pattern of the patterned elements the optical properties of the light modulator may be modified. For example, the patterned elements may alter the wavefront of light reflecting from the substrate, or transmitted through the substrate.

**Figure 6b** schematically shows an example of an embodiment of a transparent substrate 602 for use in a light modulator. The view in figure 6b is from the top. Visible in figure 6b are patterned elements; one of which has reference number 622. Figure 6b is too scale; a virtual scale of 1 micrometer is shown at reference numeral 632. The shown pattern elements may be embodied at transparent cylinders. The top circular view of said cylindrical patterns is visible in figure 6b. The pattern shown in figure 6b is a detail; the pattern is extended across the substrate in an embodiment. Further details regarding cylindrical patterns may be found in the paper "Flat optics with dispersion-engineered Metasurfaces", by Wei Ting Chen, et al., said paper being included herein by reference. Table 1 of the latter paper also shows various materials suitable for metasurface together with information regarding size and bandwidth.

Instead of a cylinder, the patterned elements may have various other shapes. For example, the top view of the patterned elements may be V-shaped, e.g., as shown in the paper "Broadband Light Bending with Plasmonic Nanoantennas", by Xingjie Ni, et al., said paper being included herein by reference. This paper also explains the generalized version of Snell's law that allows for better control of light manipulation. Metasurfaces may be designed for which the theoretical predictions given by the generalized Snell's law match well with experimental data.

Manufacture of metasurfaces may use various CMOS manufacturing technologies. The paper "Large-area metasurface on CMOS-compatible fabrication platform: driving flat optics from lab to fab", by Nanxi Li, et al., included herein by reference, discusses mass producible, low cost, metasurfaces over a large area that may be manufactured with commonly used semiconductor technologies, e.g., with lithography steppers and scanners.

An example of a manufacturing method of metasurfaces is given in the paper "High efficiency dielectric metasurfaces at visible wavelengths", by Robert C. Devlin, et al., said paper being included herein by reference. For example, Figure 2 of said paper shows a fabrication process for dielectric metasurfaces.

**Figure 6c****.****1** schematically shows an example of an embodiment of a transparent substrate for use in a light modulator. **Figure 6c****.****2** schematically shows an example of an embodiment of a transparent substrate for use in a light modulator. Figure 6c. 1 shows a side view. Figure 6c. 1 shows a top view of the same configuration as shown in figure 6c. 1. Shown in the figures is a substrate with two of its patterned elements.

The patterned elements have a 2D-diameter, defined as a maximal diameter in a two-dimensional cross-section parallel to the substrate of nanoelement. For example, the 2D-diameter is the largest distance between any two points of the patterned element, where the two points are restricted to lie in the same plane, parallel to the substrate. The 2D-diameter is indicated in the figures with reference numeral 662.

The patterned elements have a height, defined as the maximal extension of the patterned element from the substrate measured in a direction perpendicular to the substrate. The height of the two patterned elements is indicated with reference numeral 661. Furthermore, the distance to the next nearest element is indicated with numeral 663.

In an embodiment the 2D-diameter, the height, and nearest distance are related to the target frequencies for which the patterned element is active.

For example, in an embodiment, the 2D-diameter is at most 10 micrometer, at most 2 micrometer, at most 1 micrometer, or at most 500 nanometer.

For example, in an embodiment, the smallest distance between two patterned elements is at most 2 micrometer, at most 1 micrometer, or at most 500 nanometer. For example, in an embodiment, a smallest distance between two patterned elements is at least 10 nanometer, at least 50 nanometer, at least 100 nanometer, 200 nanometer, or 400 nanometer.

A patterned element is allowed to have a longer dimension if another dimension is smaller. For example, in an embodiment, the patterned elements have at least two non-consecutive edges, a minimum distance between two points on respective ones of the non-consecutive edges being at most 2 micrometer, at most 1 micrometer, or at most 500 nanometer. For example, the patterned element may be a polygon, e.g., a rectangle. The rectangle may have a short edge, e.g., below the indicated ranges, while the other edge may be longer, e.g., longer than 2 micron.

For example, in an embodiment, the patterned elements extend in at least two directions. For example, the two direction may make an angle between 30 and 150 degrees, between 60 and 120 degrees, e.g., about 90 degrees. For each direction, a longest distance may be identified, e.g., the longest distance between two points in the same patterned element. In an embodiment, the shorter of the two distances is at most 2 micrometer, at most 1 micrometer, or at most 500 nanometer. For example, the nanoelement may be an oval that is longer than it is wide.

In an embodiment, the sizes of the patterned elements or their interobject distance may differ. For example, in an embodiment, different optical effects may be desired different positions of the light modulator. For example, in signage, a holographic effect may be desired in part of the light modulator, but not everywhere. Accordingly, Small and large patterned elements, small or large interobject distances, may be mixed in a light modulator.

For example, in an embodiment, the height is at most 2 micrometer, at most 1 micrometer, or at most 500 nanometer, preferably, a height between 100 and 1000 nanometer.

In an embodiment the 2D-diameter, the height, and nearest distance are all at most 2 micrometer, at most 1 micrometer, or at most 500 nanometer.

The height of patterned element may be uniform; e.g., the patterned element may have a flat top, parallel to the substrate. The left patterned element in figure 6c.1 has uniform height. The height of patterned elements may also be uniform across the substrate; e.g., all patterned elements have the same height. The two patterned elements in figures 6c. 1 have the same height.

The height of a patterned element is typically much less than the height, e.g., thickness, of the substrate, although patterned elements may be applied to thin substrates as well. For example, in an embodiment the substrate has a thickness of 10 micron or more, while the patterned elements, e.g., have a height of less than a micron. For example, the substrate may be a plastic film. The thickness of the substrate may be at least 10 times the height of the patterned elements. The ratio is typically higher though. In an embodiment, the thickness of the substrate may, e.g., is at least 100, or at least 1000 times the height of the patterned elements.

Figures 6d.1 and 6d.2 illustrate the functioning of a metasurface in the context of a light modulator.

**Figure 6d.1** schematically shows an example of a light modulator 643 without patterned elements.

Shown is a primary wavefront 642 that impinges on the light modulator. For example, the light modulator may be smart glass, and primary wavefront 642 may come from ambient light, e.g., sunlight. Light modulator 643 which is only schematically indicated may be of the type shown in figures 4a-4c, 5a-5b, but without the patterned elements that create a metasurface on the light modulator. Shown in light modulator 643 are cross-sections of the driving electrodes that are arranged in a pattern on the substrates; in this case electrodes are arranged on both substrates.

The pattern of electrodes has a distorting effect on the wavefront after it has passed through light modulator 643. The distorted wavefront 644 is shown in figure 6d.1. The distortion is visible in optical artefacts such as rainbow effects and diffraction. The distortion can also be computed, e.g., using the generalized Snell law.

**Figure 6d.2** schematically shows an example of an embodiment of a light modulator 653 with patterned elements. The light modulator of figure 6d.2 is similar to that of figure 6d.1 except that it includes patterns elements forming a metasurface according to an embodiment.

Shown is the primary wavefront 642 that impinges on the light modulator. Light modulator 644 uses the same driving electrodes as figure 6d.1, but includes patterned elements extending across the substrate to form a metasurface on the light modulator. One patterned element is shown with reference numeral 655. In this example, the patterned elements are applied on one side of each substrate, in this case on the side facing towards an optical layer of light modulator 653. As shown herein, the metasurface may be formed instead or as well on the surface facing away from the optical layer; the metasurface may be formed on only one substrate, or on more than two substrates.

The nanopatterned elements have an impact on the wavefront, in addition to the impact of the driving electrodes. The elements may be chosen to correct the wavefront; figure 6d.2 shows a corrected wavefront 654.

The patterns elements have been selected in a computerized selection algorithm. The algorithm computes the impact on the primary wavefront 642 by the combination of driving electrodes and patterned elements. The location and/or shape of the patterned elements is modified in multiple iterations to minimize a loss function, including one or more loss terms.

A loss term, which is used in this case, includes a distance term between the outgoing wavefront and the regular primary incoming wavefront. That is, any optical change in the wavefront is minimized. For example, the minimization may be for a particular light frequency or for multiple frequencies, e.g., representing visible sunlight. For example, the minimization may be for various angles of the light. The severity of optical artefacts may depend on the properties of the light, e.g., its direction and frequency(ies). By simulating across a range of conditions a generally well-performing design may be chosen.

Accordingly, multiple candidate designs may be simulated for a range of conditions, e.g., different lighting conditions. A design is selected from the multiple candidate designs that has preferable simulated results, e.g., the lowest average loss across the conditions.

A loss term, which may be used or in addition or instead, directly estimates the severity of known artefacts, e.g., rainbow effects, and diffraction. Minimizing this loss term allows that the light modulator has an impact on light but that distracting elements are reduced. The optimization may use hill climbing techniques such as simulated annealing.

To reduce computation time, in an embodiment a pattern of patterned elements forming a metasurface may be optimized for a small area, e.g., a building block, which may be repeated across the substrate.

To reduce computation time, in an embodiment, the patterned elements are selected from a predetermined set, e.g., using a set of cylindrical, or chevron shaped elements, of a limited number of sizes. Optimizing the metasurface may now be reduced to selecting from a limited number of sizes and the location of the elements. Thus, the optimization does not need to consider the full range of sizes that are possible. A yet further reduction in computation time may be obtained by restricting the location of the elements to a predetermined grid. A yet further reduction in computation time may be obtained by restricting the possible rotations of the elements to a limited number of predetermined sizes. The latter optimization is not applicable to rotation symmetric elements, e.g., cylinders, but may be used for polygonal shapes, e.g., chevron shaped elements.

The optimization may also optimize the location of the electrodes, together with the patterned elements. In this case, the loss term may also include losses specific for the electrodes, e.g., how well the light modulator operates, e.g., speed and uniformity of state transitions.

In figure 6d.2 the optimization is aimed to reduce the impact of the electrodes on the wavefront. This is not necessary though; the optimization may instead aim to introduce any desired change to the wavefront. For example, in an embodiment, the patterned elements are configured to alter wavefront 642 of light passing through the substrate to generate a holographic image.

The patterned elements, e.g., subwavelength-scale geometric structures, can be tailored to produce a broad range of optical functions. To produce a metasurface design, e.g., a pattern of patterned elements that gives a desired optical response topology optimization may be employed, e.g., using a freeform metasurface. For example, the topology optimization may use a local gradient-based optimizer, e.g., using an adjoint variables method. Local gradient-based topology optimizers take an initial device design and iteratively improve it through perturbations, e.g., small changes to the geometric layout of the metasurface and/or the patterned elements, in order to approach a desired optical response. Advantageously, the perturbations may be obtained using an adjoint variables method. This approach allows for the creation of advanced metasurfaces with capabilities beyond those of existing design methods.

For example, the gradient-based optimization may use an adjoint variables method. In this approach, a set of adjoint variables is introduced and used to calculate the gradient of an objective function with respect to the design variables. This gradient information is then used to make small adjustments to the design in order to improve the performance of the system. The objective function may comprise a distortion parameter, e.g., diffraction and rainbowing, uniformity, and possibly a target grayscale. The optimization may be combined with one or more distributions of particles such as can be produced with the driving electrodes, e.g., as shown in figures 5a-5c.

Topological optimization is further discussed in `Metagrating Topology Optimization', by J. Fan, incorporated by reference.

The pattern of patterned elements, e.g., the metasurface, may be used for various purposes. An important application is to correct for the optical effects of the electrodes. Like the patterned elements also the driving electrode affect the optical effects of the light modulator. The patterned elements may create an opposite optical effect compared to the one created by the driving electrodes of the modulator, e.g., compensate for optical aberration generated by the driving electrode. For example, a common problem for substrates of the type shown in figure 6a is diffraction, sometimes called the rainbow effect. The patterned elements may countervail the diffraction caused by the electrodes. The patterns shown in figures 2a-2f suffer from diffraction to different degrees. For example pattern 2f having much better properties in this regard that the one of figure 2b, say. Nevertheless, in both cases adding patterned elements helps reduce the rainbow effect.

The patterned elements may be configured to compensate for various optical artifacts of the light modulator. The optical artifact may be one or more of the group: diffraction, refraction, light scattering, perturbation of the light when passing through or reflecting from the substrate. The diffraction effect caused by the driving electrodes may be reduced by arranging the patterned elements to create and equal but opposite distortion.

In an embodiment, the patterned elements are configured to reduce, e.g., minimize, the reflection of light. In this way an opaque state of the light modulator is seen as a deeper black, as reflections are reduced.

In an embodiment, the patterned elements are configured to focus impinging light inside an optical layer of the light modulator. This reduces artefacts. For example, in a light modulator comprising a first substrate, and optical layer, and a second substrate, the patterned elements on the first and/or second substrate may be arranged to focus incident light inside the optical layer, e.g., light impinging on the first and/or second substrate from outside the light modulator.

The patterned elements may provide light wavelength control to filter light passing through the substrate according to wavelength. The optical effect provided by the patterned elements may differ for light of different wavelengths. The patterned elements may provide light polarization control to manipulate linear or circular polarization. For example, polarization may be affected by having patterned elements that are not rotationally symmetric, For example, a rectangular, non-square object would affect polarization.

In an embodiment, the pattern elements are fixed. For example, the elements may be applied from a fixed material in a predetermined shape on to the substrate. For example, the elements are passive. This is not necessary though. In an embodiment, the patterned elements introduce an optical distortion that is dependent on an external factor, for example, temperature, pressure, and/or electric field. For example, the patterned elements may comprise a phase change material. For example, the patterned elements have a controllable shape. For example, patent application US2021333575A1 (incorporated by reference) discloses reversible phase-change materials, suitable to be incorporated into meta-lenses.

For example, in an embodiment, the nanoelements may be controlled, preferably independently, electrically from the electrodes, and/or may be controlled by temperature. Preferably, the nanoelements may be controlled independently.

In an embodiment of a light modulator, there is an interaction between temperature of the light modulator and the phase change of meta surface due to the temperature.

Temperature in the light modulator may be changed by various means, e.g., heating elements, e.g., heating wires, micro-heating elements. The paper "Modeling and fabrication of Pt micro-heaters built on alumina Substrate", by Goran Miskovic, shows a micro-heating element on a glass coated substrate; said paper is included herein by reference.

By changing the shape of the patterned elements control is obtained over the way a wavefront is modified by a light modulator. For example, patterned elements with changeable shape may be arranged in different shapes, e.g., in operational use of the light modulator. This allows, e.g., altering of the phase, amplitude, and/or polarization of light interacting with the substrate. For example, in an embodiment, the patterned elements comprise a phase change material having an optical distortion dependent on an external factor, for example, temperature, pressure, and/or electric field.

**Figure 6e.1** schematically shows an example of a light modulator with conductive patterned elements in a non-active state. Figure **6e.2** schematically shows an example of the light modulator with conductive patterned elements in an active state. The substrate of these figures may be used as one of the substrates in a light modulator, e.g., an electrophoretic light modulator, e.g., of the kind shown in any one of figures 3a-5b.

Patterned elements are applied to the substrate, shown here from the top in a plan view. The patterned elements are shown as rectangles. The patterned elements are transparent, e.g., transparent to visible light, or transparent in a target spectrum. As a result the patterned elements have a reduced optical effect, e.g., they may form a metasurface, but its effect may be relatively small. In particular, the patterned elements may be arranged to have a refractive index close to the substrate to further reduce the optical effect.

In an embodiment, the substrate, e.g., the first substrate, is used in a light modulator, which is configured so that particles can be aligned with the patterned elements. This may be done by arranging driving electrodes near or under the patterned elements, but a particularly advantageous way of doing this is by using conductive patterned elements. The conductive patterned elements may be supplied with an electric potential, so that particles can be moved towards the conductive patterned elements, e.g., using the electrophoretic force. For example, the second substrate may have conductive patterned elements aligned with the first substrate's elements. For example, the second substrate's elements may be arranged in a mirrored pattern with respect to a pattern on the first substrate.

By applying the electric potential to said conductive patterned elements the charged particles align with the conductive patterned elements. The effect is shown in figure 6e.2. While previously the patterned elements were transparent and had a smaller optical modulation effect, through the aligned particles, the transparency reduces and the optical effect of the patterned element increases. In this manner a meta surface is created, the effect of which can be increased or decreased as desired.

The conductive patterned elements may be controlled electrically from the same driving electrodes used in the light modulator to modulate the light. The conductive patterned elements may be controlled electrically from driving electrodes applied specifically for the conductive patterned elements.

Accordingly, in an embodiment, patterned elements may be conductive, and arranged to modulate the particles, e.g., light absorbing particles, e.g., particles that are light absorbing in the target spectrum, e.g., visible light. The optical properties of the patterned elements being modulated. The patterned elements may comprise ITO, e.g., patches of ITO.

In an embodiment, all or part of the patterned elements on the substrate are transparent and electrically conductive patterned elements. For example, they may be transparent in the transparent according to the absorption range aimed by the light modulator and/or by the substrate. For example, the light modulator may be arranged for use within a defined spectral range, such as visible light. The patterned elements may be transparent within the defined spectral range, e.g., transparent to visible light.

Furthermore, the optical parameters of these patterned elements may be close to the optical parameters of the substrate, in particular the refractive index. For example, the patterned elements may have a refraction index within 10% of a refraction index of the substrate.

The conductive patterned elements are configured to interact with particles in an optical layer of the light modulator.

The patterned elements are being arranged for receiving an electric potential to provide control over optical modulation in the light modulator. For example, the patterned elements may be individually electrically addressable, e.g., in a row-column addressing scheme. The patterned elements may be applied on the first surface in a regular grid covering at least part of the first surface, e.g., in a regular grid as part of the row-column addressing scheme. The row-column addressing may use separate electrodes from the driving electrodes. For example, the light modulator may be pixelated, the rows and columns addressing the patterned elements, and optionally the driving electrodes. This allows localized adaptation of optical effects, and optionally of transparency.

The light modulator is configured to control a grayscale of the light modulator by modulating the position of the particles in the optical layer. This may be done by applying a control signal to the electrodes on the substrates, e.g., an electric control signal. For example, in an embodiment, two substrates each have at least two electrodes, so that charged particles in the optical layer between the two substrates can be controlled, thus obtaining a controllable grayscale. For example, the signal may be an AC signal.

In an embodiment, the optical effect of the patterned elements may also be modulated in a light modulator. For example, the patterned elements may be modulated by changing temperature, e.g., in patterns that comprise a phase change material. For example, the patterned elements may be conductive so that the light absorbing particles in the optical layer may be accumulated near the patterned elements.

The light modulator may be configured to control the light modulator by applying a first control signal to the driving electrodes and a second control signal to the patterned elements. In an embodiment, the second control signal to the patterned elements depends on a desired grayscale level set within the modulator, e.g., set by the user.

For example, the signals may be obtained in a calibration phase, before an operational phase. For example, the light modulator may be installed, possibly at its final destination, e.g., in the form of smart glazing. A sensor, e.g., a camera may be arranged to observe the effect of the light modulator. The sensor measurements may be used to modify the first and/or second control signal to reduce the occurrence of unwanted phenomena, e.g., diffraction, rainbowing. For example, in the calibration phase, the light modulator may be driving across a range of first and second control signals. For the various signals sensor measurements are recorded, e.g., images. From the sensor measurements optical parameters are derived, in particular, grayscale, e.g., a transparency level of the light modulator, and a distortion value, e.g., the observed amount of diffraction and/or rainbowing.

In an embodiment, information on the direction of incident light, e.g., sunlight, may be obtained from a GPS sensor, e.g., as part of a satnav device. This is especially useful in a car, e.g., a car having smart glass. This information may be dynamically obtained during operational use.

In an embodiment, information on the orientation of glass, e.g., may be obtained by applying a sensor to the glass, e.g., during a calibration phase. The sensor may be fixed, e.g., part of a smart glass package. But may also be temporary. In particular, orientation information may be obtained by placing a smartphone flat against the glass. For example, an app on the smartphone may forward the orientation information to a controller of the smart glass, e.g., light modulator.

Orientation information is useful, as the control signal for the patterned elements may depend on the current angle of the light.

An algorithm may be applied to the sensor values and calibration control signals, e.g., for deriving a model for the optical modulator from the sensor measurements that predicts the optical effects of the light modulator and its current control signals. The model or algorithm may be computational, e.g., apply physical laws such as Snell's law, but advantageously may instead be a machine learning model. For example, a neural network may be trained to predict optical effects from the control signals and possibly other sensor values-the light modulator may be equipped with sensors such as temperature and light sensors. From sensor values that show the effect of particular control signals, the algorithm learns which control signal to use to gain a particular effect. After the calibration period the camera may be removed. In an embodiment, the system may continue to learn and further optimize the model, e.g., using user feedback or sensor measurements. Also, relatively slow changes in the environment would be automatically taken into account. The optical modulator may be manufactured independent of the environment into which it will finally be installed and operate, while still gaining fine optical control. The control of the meta surface may depend on the angle and intensity of incident light.

Accordingly, first and second control signals may be stored and or derived when needed. Depending on current sensor values, e.g., current temperature, and/or current light levels or angles, the appropriate control signals may be derived.

An embodiment of a method of calibrating a light modulator comprises
- providing the light modulator, e.g., installing the light modulator. The light modulator may be installed in a stationary position, e.g., as smart glass in a building, e.g., in an office. The light modulator may be installed in non-stationary position, e.g., as smart glass in a vehicle, e.g., a car.
- obtaining from an image sensor viewing the light modulator information on distortion and/or transparency of the light modulator. For example, the image sensor may be a temporary image sensor, installed to obtain information on the optical effects of the light modulator. For example, the image sensor may be a camera which is placed in front of the light modulator, during a calibration phase. For example, the camera may be placed on a tripod. For example, the image sensor may be placed inside a room of a building in in which the glass is placed. For example, the image sensor may be placed inside a vehicle, in which the glass is placed. If the light modulator is non-stationary, then the light modulator may be moved during the calibration phase, or part thereof, e.g., by driving the vehicle in which the light modulator is installed, possibly while recording orientation information.
- deriving a control signal for controlling the light modulator in an operational phase.

During the calibration phase, multiple control signals for the driving electrodes, and/or for the pattern elements may be applied. The image sensor may observe the effect thereof. The effects may be summarized in a distortion value, and a transparency value, e.g., a grayscale value. Control signals that provide desired effects, e.g., a particular transparency and low distortion may be stored. New control signals may be derived from stored control signals, e.g., by interpolation. A machine learnable model may be trained to predict effects of the light modulator from control signals. Advantageous control signals may be derived by trying multiple control signals in the trained model, e.g., selecting a control signal with desired parameters.

In an embodiment, the calibration method further comprises obtaining from an orientation sensor applied to the light modulator information on an orientation of the light modulator. For example, the orientation sensor may be shared with a GPS device, e.g., a satnav device, or a smartphone. The orientation sensor may also be stand alone. The orientation sensor may be temporary, e.g., applied only during the calibration phase. In an embodiment, the light modulator comprises the orientation sensor.

The orientation sensor and image sensor may be configured to provide sensor data, e.g., measurements, e.g., information on image and/or orientation, to a controller of the light modulator.

After the calibration phase, the light modulator may be controlled. A method of controlling a light modulator may comprise applying an electric potential to the driving electrode modulate an electro-magnetic field in the optical layer providing electrophoretic and/or dielectrophoretic of particles in the optical layer modulation of light passing through the substrates. For example, a control signal applied to the driving electrodes may be a control signal as stored during the calibration phase. The patterned elements applied on a surface of the light modulator may alter the phase, amplitude, and/or polarization of light passing through the substrates.

The patterned elements may be passive, e.g., may not be configured to receive a control signal. In an embodiment, the patterned elements are active, e.g., configured to receive a control signal to modulate their optical effect. For example, the patterned elements may comprise a phase change material having an optical distortion dependent on an external factor, for example, temperature, pressure, and/or electric field, the method comprising modulating the external factor to modulate the optical distortion. The patterned elements may be conductive, and arranged for their optical effect to be modulated through particles that are selectively arranged on top of the patterned element. The control method may comprise modulating the external factor, e.g., apply a control signal, to modulate the optical distortion. The control signal may be stored in a calibration phase, or derived therefrom.

The patterned elements may be combined with a coating, and may be applied to various surfaces of the substrate, to various advantages. All of figures 7a-7g show a substrate for use in a light modulator. The substrates in the figures assume ambient light is above the figure and an optical layer is below the substrate. Only in figure 7a, the side configured to be oriented towards the optical layer is schematically indicated with reference numeral 712 , but figures 7b-7g are oriented in the same manner. A bottom substrate may be obtained from any of figures 7a-7g by mirroring it in the horizontal axis.

**Figure 7a** schematically shows an example of an embodiment of a transparent substrate for use in a light modulator. The figure shows a transparent substrate 711.

Substrate 711 has two surfaces; a first surface is configured to be oriented towards the optical layer of the light modulator; this side of the substrate is indicated with reference numeral 712.

Starting from substrate 711, a layer with patterned elements is applied to a first surface of substrate 711. One patterned element is indicated with reference numeral 745. The patterned elements are arranged to alter the phase, amplitude, and/or polarization of light interacting with the substrate. Light interacting with the substrate comprises light passing through the surface and/or light reflected from the surface. For example, the patterned elements may be arranged to form a metasurface.

In this example the patterned elements are coated in coating 751 for patterned elements. Coatings used in a light modulator are typically transparent. The protective coating 751 prevents physical damage to the nanoelements.

Substrate 711 has at least one driving electrode applied to it on a first surface. One electrode has reference numeral 721. It may be that the shown electrodes all form part of one connected electrode. In a preferred electrophoretic light modulator, at least two interdigitated electrodes are applied. The electrode may be used to modulate the optical properties of the light modulator.

In this example, starting from the substrate a coating with patterned elements is applied followed by a pattern of driving electrodes. In this example, no coating is applied to the electrodes. In this arrangement, the electrodes make fluidic contact with the optical layer. In this arrangement, the patterning of nanoelements and electrodes can be determined independent the location of each other.

**Figure 7b** schematically shows an example of an embodiment of a transparent substrate for use in a light modulator. The substrate is similar to that of figure 7a, except that in this example, coating 752 for the driving electrodes is applied. In this arrangement, the electrodes make no direct fluidic contact with the optical layer. Both coatings 751 and 752 are typically non-conducting and transparent.

The protective coating 752 prevents direct contact between contaminants such as granules, fibers, rocks, lumps, grains, etc. present in the optical layer, and the electrodes. These contaminants can be formed in various ways, such as by agglomeration of smaller particles, static electricity, entrapment between electrodes, etc. Said contaminants may cause short circuits between electrodes on opposite substrates, adjacent electrodes on the same substrate, as well as cause physical damage to the electrodes themselves, or any combination of these. In one embodiment, the protective coating prevents both physical damage to the electrodes and short-circuiting between the electrodes.

**Figure 7c** schematically shows an example of an embodiment of a transparent substrate for use in a light modulator. The substrate is similar to that of figure 7a, except that in this example, the nanoelements and electrodes are both applied to the substrate in the same layer. This arrangement is thinner compared to, say, figure 7b. Selecting a location for a nanoelements now depends on the electrodes, e.g., at a location where an electrode is positioned no nanoelement can be positioned. A combined coating 753 for the driving electrode and patterned elements coating is applied to both nanoelements and electrodes.

**Figure 7d** schematically shows an example of an embodiment of a transparent substrate for use in a light modulator. In this example, the nanoelements and electrodes are applied on opposite surfaces of substrate 711. The nanoelements are applied on the second surface of substrate 711, facing away from the optical layer. The electrodes are applied on the first surface of substrate 711, facing toward the optical layer.

In this example, a coating 751 for the patterned elements is applied, but not a coating on the electrodes.

**Figure 7e** schematically shows an example of an embodiment of a transparent substrate for use in a light modulator. This substrate is similar to figure 7d, except that a coating 752 for the driving electrode is also applied to the first surface.

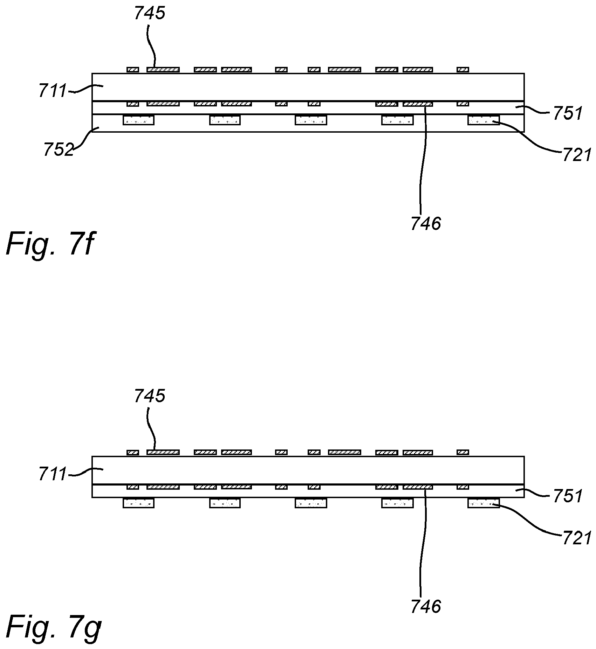

**Figure 7f** schematically shows an example of an embodiment of a transparent substrate for use in a light modulator. In this example, patterned elements are applied on both surfaces of the substrate. Shown in figure 7f, in that order, are a first layer of nanoelements, substrate 711, a second layer of nanoelements in a coating 751, driving electrodes in a coating 752. In an embodiment, a coating 751 is also applied on the second surface of the substrate.

**Figure 7g** schematically shows an example of an embodiment of a transparent substrate for use in a light modulator. Figure 7g is similar to figure 7f except that no coating has been applied to the electrodes. A coating 751 could additionally be applied on the second surface, e.g., to protect the nanoelements.

In some embodiments, the protective coating, e.g., coating 751, 752 and/or 753, provides additional optical functions to the device. In some embodiments, this is an independent optical function. In some embodiments, this is an optical function that cooperates with the electro-optical effects of the device. These can be, for example, reflective, anti-reflective, diffusive, and/or anti-diffractive effects for all light wavelengths, or for part of the electromagnetic spectrum such as UV, visible, and/or IR. The protective coating materials may be selected to be of refractive indexes sufficiently different from the fluid solvent refractive index to generate significant light refraction. For example, a protective coating made of silicon nitride having an optical refractive index of 3 may be combined with a fluid solvent with optical refractive index below 2. The refractive index differences will induce incoming light refraction, a change of light direction following Snell's law. The light modulator can then direct incoming light to designed specific directions. This effect can be combined with specific shapes and topography of the patterned protective coatings to refract lights in multiple directions and therefore increase light diffusion or haze. Similarly, different protective coatings from the same substrates or from different substrates to enhance specific light paths or diffusions are possible.

Reference is made to PCT/EP2022/066713 of the same applicant for more information on coatings, e.g., to protect electrodes, though similar coatings can be applied to nanoelements.

Depending on the material or the combination of materials chosen, the protective coating may be applied using a variety of techniques that are known in the art, such as sputtering, molecular-beam epitaxy, pulsed laser deposition, electron beam evaporation, chemical vapor deposition, atomic layer deposition, spin-coating, flexoprinting coating, dip coating, spray-coating, inkjet printing, slit coating, and combinations thereof.

**Figure 8a** schematically shows an example of an embodiment of a method 810 of manufacturing a substrate as in an embodiment. Method 810 comprises
- providing 811 the substrate
- applying 812 the driving electrode to a first surface of the substrate, arranging the substrate for a light modulator,
- applying 813 the patterned elements to a surface of the substrate, arranging the substrate with a metasurface; the surface on which the patterned elements are applied may be the first surface, or a second surface of the substrate opposite the first surface.
Applying 812 and 813 may be done simultaneously. Applying 813 the patterned elements may be done before applying 812.

**Figure 8b** schematically shows an example of an embodiment of a method 820 of manufacturing a light modulator as in an embodiment. Method 820 comprises
- providing 821 a first substrate according to an embodiment, e.g., according to method 810, and a second substrate. The second substrate may or may not have electrodes and/or patterned elements applied on them.
- applying 822 an optical layer between the first and second substrate,
- sealing the sides of the first and second substrates.

**Figure 8c** schematically shows an example of an embodiment of a method 830 of operating a light modulator as in an embodiment. Method 830 comprises
- applying 831 an electric potential to the driving electrode to modulate an electromagnetic field in the optical layer providing electrophoretic and/or dielectrophoretic of particles in the optical layer modulation of light passing through the substrates,
- altering 832 the phase, amplitude, and/or polarization of light passing through the substrates by the patterned elements applied to a surface of a substrate.

The patterned elements may optionally comprise a phase change material having an optical distortion dependent on an external factor, for example, temperature, pressure, and/or electric field. Method 830 may optionally further comprise modulating the external factor to modulate the optical distortion.

The following list of numbered clauses are examples and have each been contemplated. They are examples of embodiments.

### Substrates

Clause 1. A transparent substrate for use in a light modulator, the substrate comprising
- at least one driving electrode (111-114,121-124) applied to a first surface of the substrate, the driving electrode being arranged in a pattern across the substrate, the electrode being arranged to receive an electric potential causing modulation of the optical properties of the light modulator, wherein micro and/or nanopatterned elements are applied to a surface of the substrate altering the phase, amplitude, and/or polarization of light interacting with the substrate.

Clause 2. A substrate as in Clause 1, wherein
- the patterned elements have a maximal diameter in a two-dimensional cross-section parallel to the substrate of nanoelement, the diameter being at most 2 micrometer, at most 1 micrometer, or at most 500 nanometer, and/or
- a smallest distance between two patterned elements is at most 2 micrometer, at most 1 micrometer, or at most 500 nanometer, and/or
- a smallest distance between two patterned elements is at least 100 nanometer, 200 nanometer, or 400 nanometer.

Clause 3. A substrate as in Clause 1 or 2, wherein the patterned elements form a metasurface.

Clause 3.1. A substrate as in any one of the preceding clauses, wherein the patterned elements on the substrate have multiple different sizes, different shapes, and/or different materials.

Clause 4. A substrate as in any one of the preceding clauses, wherein the patterned elements extend from the surface, having a height of less than 1000 nanometer, preferably, a height between 100 and 1000 nanometer.

Clause 5. A substrate as in any one of the preceding clauses, wherein the patterned elements are applied to the first surface and/or wherein the patterned elements are applied to a second surface opposite the first surface.

Clause 6. A substrate as in any one of the preceding clauses, wherein the patterned elements are configured to compensate an optical artifact of the light modulator

Clause 7. A substrate as in Clause 6, wherein the optical artifact is any one of: diffraction, refraction, light scattering, perturbation of the light when passing through or reflecting from the substrate.

Clause 8. A substrate as in any one of the preceding clauses, wherein the patterned elements are configured to create an opposite diffractive effect compared to the one created by the driving electrodes of the modulator.

Clause 9. A substrate as in any one of the preceding clauses, wherein the patterned elements provide light wavelength control to filter light passing through the substrate according to wavelength.

Clause 10. A substrate as in any one of the preceding clauses, wherein the patterned elements alter the wavefront of light passing through the substrate generating a holographic image.

Clause 11. A substrate as in any one of the preceding clauses, wherein the patterned elements alter the wavefront of light reflecting through the substrate and compensate for optical aberration generated by the driving electrode.

Clause 12. A substrate as in any one of the preceding clauses, wherein the patterned elements provide light polarization control to manipulate linear or circular polarization.

Clause 12.1 A substrate as in any one of the preceding clauses, wherein the patterned elements are passive, e.g., are not controllable by an external factor, or active, e.g., are controllable by an external factor.

Clause 13. A substrate as in any one of the preceding clauses, wherein the patterned elements include elements of controllable shape, arranged to provide control the altering of the phase, amplitude, and/or polarization of light interacting with the substrate.

Clause 14. A substrate as in any one of the preceding clauses, wherein the light modulator is arranged for use within a defined spectral range, wherein the patterned elements have a total transmittance within the spectral range of at most 10%

Clause 15. A substrate as in any one of the preceding clauses, wherein the patterned elements comprise a phase change material having an optical distortion dependent on an external factor, for example, temperature, pressure, and/or electric field.

Clause 16. A substrate for use in a light modulator, as in any one of Clauses 1-15, wherein the pattern of the driving electrode across the substrate comprising multiple repeated building blocks

Clause 15. A substrate as in any one of the preceding clauses, wherein
- a building block repeats across the substrate in at least two directions, and/or
- multiple different building blocks repeat across the substrate in one or two directions.

Clause 16. A substrate as in any one of the preceding clauses, wherein at least one driving bus is arranged on the substrate for each driving electrode of the at least one driving electrode to drive the driving electrode, wherein
- at least one driving bus is arranged at a side of the substrate for each driving electrode to drive the driving electrode, and/or
- the driving busses are only arranged at the side of the substrate, and/or
- the driving busses are arranged between the building blocks covering the substrate.

Clause 17. A substrate as in any one of the preceding clauses, wherein the substrate is non-rectangular.

Clause 18. A substrate for use in a light modulator as any one of the preceding clauses, wherein the at least one driving electrode comprises multiple driving electrodes,
- the multiple driving electrodes (111-114,121-124) being interdigitated, each of the multiple driving electrodes being arranged in a pattern across the substrate, the multiple interdigitated driving electrodes being arranged alternatingly with respect to each other on the substrate, the pattern of multiple driving electrodes across the substrate comprising multiple repeated building blocks.

Clause 19. A substrate for use in a light modulator as in Clause 18, wherein the building block comprises
- the multiple interdigitated electrodes extending in at least 2 directions across the building block, the interdigitated electrodes in the building block forming the driving electrodes, for at least one electrode in the multiple interdigitated electrodes in the building block a maximal length between any two points on said electrode measured along said electrode in the building block is at least 2 times the length of the diagonal of the building block unit.

Clause 20. A substrate for use in a light modulator as any one of the preceding clauses, wherein the at least one driving electrode comprises multiple driving electrodes, wherein
- from any point in the substrate, a nearest distance to a first and to a second driving electrode is below a threshold, and/or
- from any point in the substrate, the sum of the nearest distance to the first and to the second driving electrode is below a first threshold, and/or above a second threshold, and/or
- a distance from a point on a first driving electrode to a point on a second driving electrode is at least a second threshold, and/or
- a horizontal and/or vertical size of the building block is at least 10 times the sum of an electrode line width and an electrode distance.

### Light Modulator

Clause 21. A light modulator comprising a first substrate as in any one of clauses 1-20, and a second substrate, an optical layer extending between the first and second substrate, optical properties of the light modulator being modifiable by applying an electric potential to at least the driving electrode.

Clause 22. A light modulator comprising:
- a first substrate and a second substrate, at least one of the first substrate and the second substrate being provided with patterned elements, e.g., according to an embodiment, e.g., according to clauses 1-20, at least one of the first substrate and the second substrate being arranged with inner sides opposite to each other, the first substrate being transparent, at least one driving electrode being applied to the inner side of the first substrate, the driving electrode extending in a pattern across the inner side of the first substrate,
- an optical layer arranged between the first substrate and second substrate that comprises a fluid comprising particles,
- a controller configured to apply an electric potential to the at least one driving electrode to obtain an electro-magnetic field providing movement of the particles towards or from the driving electrode causing modulation of the optical properties of the light modulator.

Clause 23. A light modulator as in any one of the preceding clauses, wherein at least one driving electrode comprises an ITO electrode.

Clause 24. A light modulator according to any one of the preceding clauses, wherein the particles are electrically charged or chargeable, and the controller is configured to apply an electric potential to the driving electrode to obtain an electro-magnetic field providing electrophoretic movement of the particles towards or the driving electrode causing modulation of the optical properties of the light modulator.

Clause 24.1. A light modulator as in any one of Clauses 21-24, wherein multiple interdigitated driving electrodes are arranged across each of the first and second substrate's inner side, and a controller configured to apply an electric signal to the multiple electrodes to obtain an electric field between the multiple electrodes providing electrophoretic movement of the particles causing the modulation of the optical properties of the light modulator.

Clause 24.2 A light modulator as in any one of Clauses 21-24.1, the light modulator being configured to
- switch to the non-transparent state by creating an alternating voltage on at least one of the first second substrate and second substrate, applying an alternating current between at least a first electrode and a second electrode on the first substrate and/or between a first electrode and a second electrode on the second substrate,
- switch to the transparent state by creating an alternating voltage between the first and second substrate, applying an alternating current between a first electrode on the first substrate and a first electrode on the second substrate, and/or between a second electrode on the first substrate and a second electrode on the second substrate.

Clause 24.3 A light modulator as in Clauses 21-24.2, wherein the electric signal is an AC signal.

Clause 24.4 A light modulator according to any one of the preceding clauses, wherein the particles are charged or chargeable, wherein particles are moved due to an electrophoretic force.

Clause 25. A light modulator according to any one of the preceding clauses, wherein the particles are charged or chargeable, wherein particles are moved due to an electrophoretic force.

Clause 26. A light modulator according to any one of the preceding clauses, wherein the driving electrode is a line electrode, e.g., wherein the line electrode extends, along a longitudinal direction and along a transverse direction, said extension being, at least at a local portion of the line electrode, at least 10 time, more preferable at least 100 times, longer in the longitudinal direction being than the extension in the transverse direction.

Clause 27. A light modulator according to any one of the preceding clauses, having
- a transparent state and a non-transparent state, and/or
- a reflective state and a non-reflective state,
the light modulator being configured to switch between states by modulating a current between the one or more driving electrodes applied on the first substrate and optionally one or more driving electrodes applied on the second substrate.

Clause 28. A light modulator according to any one of the preceding clauses, wherein
- an electric signal is provided as an alternating current (AC) in the one or more electrodes, or
- an electric signal is provided as a direct current (DC) in the one or more electrodes, wherein the voltage is periodically reversed.

Clause 29. A light modulator as in any one of the preceding clauses, wherein the first substrate and the second substrate are transparent.

Clause 30. A light modulator as in any one of the preceding clauses, wherein one of the first substrate and the second substrate is transparent and one of the first and second substrates is reflective or partially reflective.

Clause 31. A light modulator as in any one of the preceding clauses, wherein the one or more electrodes comprise multiple interlaced mesh electrodes,
- multiple interlaced mesh electrodes extending in a two-dimensional pattern across the first substrate and across the second substrate, two mesh electrodes of the multiple mesh electrodes on a substrate crossing at a plurality of crossing points spread across the substrate.

Clause 32. A light modulator as in any one of the preceding clauses, wherein
- the particles are nanoparticles and/or microparticles, and/or
- the particles are adapted to absorb light,
- the particles are pigment particles.

Clause 33. A light modulator as in any one of the preceding clauses, wherein the at least two electrodes comprise an electrically conducting material with a resistivity of less than 100 nΩm at 273 K,

Clause 34. A light modulator as in any one of the preceding clauses, wherein the electrodes are in fluidic contact with the fluid or wherein the electrodes are separated from the fluid, e.g., by a coating.

Clause 35. A light modulator as in any one of the preceding clauses, wherein electrodes applied to a substrate cover 1-30% of a substrate surface.

Clause 36. A light modulator as in any one of the preceding clauses, wherein the electric potential is operated at an AC frequency of 10-100 Hz for switching to a transparent state, and/or is operated at an AC frequency of less than 1 Hz for switching to a non-transparent state.

Clause 37. A light modulator as in any one of the preceding clauses, wherein a size of the nanoparticles is from 10-1000 nm, preferably from 100-500 nm.

Clause 38. A light modulator as in any one of the preceding clauses, wherein the particles are adapted to absorb light with a wavelength of 10 nm-1 micron.

Clause 39. A light modulator as in any one of the preceding clauses, wherein a distance between the first and second substrates is smaller than 500 µm.

Clause 40. A light modulator as in any one of the preceding clauses, wherein a dynamic viscosity of the fluid is 500 mPa.s or less.

Clause 41. A light modulator as in any one of the preceding clauses, wherein the fluid has a relative permittivity εᵣ of less than 100.

### Method

Clause 42. A method of modulating light, comprising
- applying an electric potential to one or more driving electrodes applied to one or two opposing substrates to obtain an electro-magnetic field between the driving electrodes providing electrophoretic movement of the particles towards or from one of the multiple driving electrodes causing modulation of light shining through the substrates, wherein the at least one or both of the two opposing substrates are as in any one of the preceding Clauses.

Clause 43. A method of modulating light, according to clause 42, comprising using an alternating current having two phases with an electrical potential between -220 V and + 220 V, and an electrical current between -100 µA and + 100 µA.

Clause 44. A transitory or non-transitory computer readable medium comprising data representing instructions, which, when executed by a processor system, cause the processor system to perform the method according to clause 42 or 43.

**Figure 9a** shows a computer readable medium 1000 having a writable part 1010 comprising a computer program 1020, and a computer readable medium 1001 also having a writable part comprising a computer program. The computer program 1020 comprising instructions for causing a processor system to operate a light modulator, according to an embodiment. For example, a processor system may be connected to a light modulator panel. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said light modulator method.

**Figure 9b** shows in a schematic representation of a processor system 1140 according to an embodiment of a controller for a light modulator. The processor system comprises one or more integrated circuits 1110. The architecture of the one or more integrated circuits 1110 is schematically shown in Figure 9b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., the device may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be an ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

A controller for a light modulator, e.g., to control voltages applied to electrodes may comprise a processor circuit, but may also or instead comprise a state machine.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A transparent substrate for use in a light modulator, the substrate comprising
- at least one driving electrode (111-114,121-124) applied to a first surface of the substrate, the driving electrode being arranged in a pattern across the substrate, the electrode being arranged to receive an electric potential causing modulation of the optical properties of the light modulator, wherein nano and/or micro patterned elements are applied to a surface of the substrate altering the phase, amplitude, and/or polarization of light interacting with the substrate.

2. A substrate as in Claim 1, wherein
- the patterned elements have a maximal diameter in a two-dimensional cross-section parallel to the substrate, the diameter being at most 10 micrometer, at most 2 micrometer, at most 1 micrometer, or at most 500 nanometer, and/or
- a smallest distance between two patterned elements is at most 2 micrometer, at most 1 micrometer, at most 500 nanometer, and/or
- a smallest distance between two patterned elements is at least 10 nanometer, at least 50 nanometer, at least 100 nanometer, 200 nanometer, or 400 nanometer,
- the patterned elements have at least two non-consecutive edges, a minimum distance between two points on respective ones of the non-consecutive edges being at most 2 micrometer, at most 1 micrometer, or at most 500 nanometer.

3. A substrate as in Claim 1 or 2, wherein the patterned elements form a metasurface.

4. A substrate as in any one of the preceding claims, wherein the patterned elements extend from the surface having a maximal height in a direction perpendicular to the substrate, the height being at most 2 micrometer, at most 1 micrometer, or at most 500 nanometer, preferably, a height between 100 and 1000 nanometer.

5. A substrate as in any one of the preceding claims, wherein the patterned elements are applied to the first surface and/or wherein the patterned elements are applied to a second surface opposite the first surface.

6. A substrate as in any one of the preceding claims, wherein the patterned elements are arranged to compensate an optical artifact of the light modulator caused by the driving electrodes.

7. A substrate as in Claim 6, wherein the optical artifact is any one of: diffraction, refraction, light scattering, perturbation of the light when passing through or reflecting from the substrate.

8. A substrate as in any one of the preceding claims, wherein the patterned elements are configured to create an opposite diffractive effect compared to the one created by the driving electrodes of the modulator.

9. A substrate as in any one of the preceding claims, wherein the patterned elements provide light wavelength control to filter light passing through the substrate according to wavelength.

10. A substrate as in any one of the preceding claims, wherein the patterned elements alter the wavefront of light passing through the substrate generating a holographic image.

11. A substrate as in any one of the preceding claims, wherein the patterned elements alter the wavefront of light reflecting through the substrate and compensate for optical aberration generated by the driving electrode.

12. A substrate as in any one of the preceding claims, wherein the patterned elements provide light polarization control to manipulate linear or circular polarization.

13. A substrate as in any one of the preceding claims, wherein the patterned elements include elements of controllable shape, arranged to provide control the altering of the phase, amplitude, and/or polarization of light interacting with the substrate.

14. A substrate as in any one of the preceding claims, wherein the light modulator is arranged for use within a defined spectral range, wherein the patterned elements have a total transmittance within the spectral range of at most 10%.

15. A substrate as in any one of the preceding claims, wherein the patterned elements comprise a phase change material having an optical distortion dependent on an external factor, for example, temperature, pressure, and/or electric field.

16. A substrate as in any one of the preceding claims, wherein the patterned elements on the substrate comprise transparent and electrically conductive patterned elements, the patterned elements being arranged for receiving an electric potential to provide control over optical modulation in the light modulator.

17. A substrate as in Claim 16, wherein the patterned elements are configured to interact with particles in an optical layer of the light modulator.

18. A substrate as in any one of claims 16-17, wherein the patterned elements are individually electrically addressable.

19. A substrate as in claim 18, wherein the patterned elements are applied on the first surface in a regular grid covering at least part of the first surface.

20. A method of manufacturing a substrate as in any one of the preceding claims, comprising
- providing the substrate
- applying the driving electrode to a first surface of the substrate,
- applying the patterned elements to a surface of the substrate.

21. A light modulator comprising a first substrate as in any one of claims 1-19, and a second substrate, an optical layer extending between the first and second substrate, optical properties of the light modulator being modifiable by applying an electric potential to at least the driving electrode.

22. A light modulator as in Claim 21, wherein the optical layer comprises charged particles, the patterned elements on the first substrate comprises transparent and electrically conductive patterned elements, the light modulator being configured to apply an electric potential to said conductive patterned elements causing the charged particles to align with the conductive patterned elements thus modulating the optical properties of the patterned elements.

23. A light modulator as in any one of claims 21 and 22, wherein the patterned elements are arranged to focus light impinging on the first substrate inside the optical layer.

24. A method of calibrating a light modulator, as in any one of Claims 21-23, comprising
- providing the light modulator,
- obtaining from an image sensor viewing the light modulator information on distortion and/or transparency of the light modulator,
- deriving a control signal for controlling the light modulator in an operational phase.

25. A method as in Claim 24, further comprising,
- obtaining from an orientation sensor applied to the light modulator information on an orientation of the light modulator.

26. A method of controlling a light modulator, the light modulator being as in any one of Claims 21-23, comprising applying an electric potential to the driving electrode modulate an electro-magnetic field in the optical layer providing electrophoretic and/or dielectrophoretic of particles in the optical layer modulation of light passing through the substrates, wherein the phase, amplitude, and/or polarization of light passing through the substrates are further altered by the patterned elements applied to a surface of a substrate.

27. A method of controlling a light modulator as in Claim 26, wherein the patterned elements comprise a phase change material having an optical distortion dependent on an external factor, for example, temperature, pressure, and/or electric field, and/or wherein the patterned elements are conductive having an optical distortion dependent on an external factor comprising an electric potential, the method comprising modulating the external factor to modulate the optical distortion.

28. A transitory or non-transitory computer readable medium (1000) comprising data (1020) representing instructions, which when executed by a processor system, cause the processor system to perform any one of the methods according to claim 24-27.
